# EUROPÄISCHE PATENTSCHRIFT

(11) **EP 2 609 597 B1**
(45) Veröffentlichungstag und Bekanntmachung des Hinweises auf die Patenterteilung: **19.11.2014**
(21) Anmeldenummer: 11748562.3
(22) Anmeldetag: 18.07.2011
(51) Int. Cl.: B01D 53/04, G21C 9/004, G21C 13/10, B01D 47/10, B01D 53/26

(54) **VERFAHREN ZUR DRUCKENTLASTUNG EINES KERNKRAFTWERKS, DRUCKENTLASTUNGSSYSTEM FÜR EIN KERNKRAFTWERK SOWIE ZUGEHÖRIGES KERNKRAFTWERK**
METHOD FOR DEPRESSURIZING A NUCLEAR POWER PLANT, DEPRESSURIZATION SYSTEM FOR A NUCLEAR POWER PLANT, AND ASSOCIATED NUCLEAR POWER PLANT
PROCÉDÉ DE DÉPRESSURISATION D'UNE CENTRALE NUCLÉAIRE, SYSTÈME DE DÉPRESSURISATION POUR UNE CENTRALE NUCLÉAIRE ET CENTRALE NUCLÉAIRE CORRESPONDANTE

(30) Priorität: 25.08.2010 DE 102010035509
(43) Veröffentlichungstag der Anmeldung: 03.07.2013
(73) Patentinhaber: AREVA GmbH, 91052 Erlangen (DE)
(72) Erfinder: ECKARDT, Bernd, 63486 Bruchköbel (DE); LOSCH, Norbert, 63071 Offenbach (DE); PASLER, Carsten, 63110 Rodgau (DE)
(74) Vertreter: Kugler, Jörg
(86) Internationale Anmeldenummer: PCT/EP2011/003574
(87) Internationale Veröffentlichungsnummer: WO 2012/025174

(56) Entgegenhaltungen:
- DE-A1- 3 815 850
- DE-A1- 3 824 606
- DE-B3- 10 328 773
- US-A- 5 272 738

## Beschreibung

Die Erfindung betrifft ein Verfahren zur Druckentlastung eines Kernkraftwerks mit einer Sicherheitshülle zum Einschluss von Aktivitätsträgern und mit einem Auslass für einen Entlastungsstrom, wobei der Entlastungsstrom über eine mit einem Filtersystem versehene Entlastungsleitung aus der Sicherheitshülle in die Atmosphäre geführt wird, wobei das Filtersystem eine Filterkammer mit einem Filterkammereinlass, einem Filterkammerauslass und einem dazwischen liegenden Sorbensfilter umfasst, und wobei der Entlastungstrom
- zunächst in einem Hochdruckabschnitt geführt wird,
- anschließend durch Expansion an einer Drosseleinrichtung entspannt wird,
- anschließend zumindest teilweise durch die Filterkammer mit dem Sorbensfilter hindurch geleitet wird, und
- schließlich in die Atmosphäre ausgeblasen wird.

Die Erfindung betrifft weiterhin ein entsprechendes Druckentlastungssystem für ein Kernkraftwerk mit einer Sicherheitshülle zum Einschluss von Aktivitätsträgern und mit einem Auslass für einen Entlastungsstrom, wobei an den Auslass eine mit einem Filtersystem versehene Entlastungsleitung angeschlossen ist, wobei das Filtersystem eine Filterkammer mit einem Filterkammereinlass, einem Filterkammerauslass und einem dazwischen liegenden Sorbensfilter umfasst, und wobei
- die Entlastungsleitung einen Hochdruckabschnitt umfasst,
- am Ende des Hochdruckabschnitts eine Drosseleinrichtung in die Entlastungsleitung geschaltet ist,
- die Entlastungsleitung stromabwärts der Drosseleinrichtung in den Filterkammereinlass mündet, und
- der Filterkammerauslass mit einer in die Atmosphäre führenden Ausblasöffnung verbunden ist.

Die Erfindung betrifft schließlich ein Kernkraftwerk mit einem derartigen Druckentlastungssystem.

Zur Zurückhaltung von bei Havariezuständen, insbesondere im unwahrscheinlichen Fall von Kernschmelze, entstehenden aktiven Gasen oder Dämpfen sind Kernkraftwerke üblicherweise mit einer vergleichsweise massiven, hermetisch gegenüber der Außenwelt verschlossenen Sicherheitshülle aus Beton, Stahlbeton oder Stahl umgeben, die auch als Containment bezeichnet wird. Üblicherweise sind derartige Sicherheitshüllen dafür ausgelegt, auch hohen Innendrücken, wie sie etwa bei einer Knallgasexplosion oder bei massiver Freisetzung von Kühlmitteldampf aus dem Kühlmittelkreislauf auftreten können, standzuhalten.

Untersuchungen zum Containmentverhalten unter deutlich erhöhten Unfalldrücken haben jedoch gezeigt, dass in ungünstigen Situationen aufgrund entstehender Leckstellen möglicherweise eine relevante Freisetzung von vergleichsweise stark kontaminierter Atmosphäre in die Umgebung erfolgen kann. Zur Minimierung von solch ungefilterten Leckagen ist es sehr vorteilhaft, wenn eine weitgehende Druckentlastung bis auf geringe Überdrücke, oder sogar auf Umgebungsdruck, durchgeführt werden kann. Dies ist insbesondere bei Containments von signifikanter Bedeutung, für die in solchen Überdruckphasen eine Rissbildung aufgrund der Konstruktion wahrscheinlicher wird, wie z. B. bei Betoncontainment oder in sensitiven Dichtungsbereichen, wie Schleusen, etc.

In zahlreichen Kernkraftwerken sind daher bereits unterschiedliche Systeme zur Überdruckbegrenzung und (gefilterten) Druckentlastung des Containments in Unfallsituationen installiert. Diese Einrichtungen ermöglichen die Rückhaltung der Aerosole und teilweise auch des elementaren Jodes. Eine effektive Rückhaltung von Organojod aus diesem Entlastungsstrom - im passiven Betrieb ohne Fremdenergiezufuhr - ist bislang nicht möglich. Neuere Erkenntnisse in der Unfallforschung zeigen jedoch, dass in solchen Ereignissen insbesondere der emittierte Organojodanteil wesentlich zur Strahlenbelastung der Bevölkerung beitragen kann und somit risikorelevant ist. Unter Organojod wird im Rahmen dieser Anmeldung insbesondere Jod in Form von organischen Verbindungen niederer Kohlenstoffzahl, wie Methyljodid, etc. verstanden.

Beispielsweise wird bei dem eingangs genannten Verfahren gemäß der internationalen Offenlegungsschrift WO 90/16071 und der zugehörigen apparativen Einrichtung ein durch eine Entlastungsleitung aus der Sicherheitshülle ausströmender, unter vergleichsweise hohem Druck stehender Entlastungsstrom nach seiner Entspannung und Expansionstrocknung durch ein auch als Drossel bezeichnetes Drosselventil durch eine Filterkammer mit einem Sorbensfilter geleitet. Derartige Sorbensfilter werden auch als Molekularsiebe oder kurz Molsiebe bezeichnet und halten das elementare Jod im Entlastungsstrom durch Sorbtion vergleichsweise gut zurück, wenn die Betriebsbedingungen derart gewählt sind, dass es zu keiner Auskondensation des Entlastungsstroms im Molekularsieb kommt. Im Feuchtbetrieb hingegen kann es zur Zerstörung oder irreversiblen "Verstopfung" der empfindlichen Filterflächen kommen.

Um dies zu vermeiden, wird gemäß WO 90/16071 eine hinreichend hohe Betriebstemperatur des Jodsorbensfilters, insbesondere mit Silbernitratauflage, dadurch sichergestellt, dass der vergleichsweise warme Entlastungsstrom im Hochdruckabschnitt der Entlastungsleitung, also stromaufwärts der Drossel, an der Filterkammer vorbei (oder auch durch Beheizungsrohre durch einzelne Filterelemente hindurch) geleitet wird und diese dabei durch Wärmeübertrag vorheizt. Die Einrichtung ist kombinierbar mit einer vorgeschalteten Grob- und Feinfilterung, einem Metallfasersieb zur Gasentfeuchtung, und zusätzlich mit einem frei ausblasenden Venturiwäscher. Der erzielte Taupunktabstand des Entlastungsstroms im Niederdruckabschnitt ist im Wesentlichen durch die (theoretische) Drosseltemperatur festgelegt und beträgt hier konstruktionsbedingt nur rund 5 °C. Die Rückhaltung von Organojod ist, wie oben bereits erwähnt, gemäß jüngeren Untersuchungen nicht zufriedenstellend, jedenfalls nicht bei ökonomisch vertretbarer Betriebsweise ohne Fremdenergieeinsatz.

Weiterhin treten besonders in Abschaltphasen (kein Durchfluss) durch den Zerfall der eingelagerten Aktivitäten erhebliche Nachwärmemengen auf. Dies kann zu einer relevanten Aufwärmung des Molekularsiebes führen, wobei bereits bei einer Betriebstemperatur von ca. 210 °C eine Zerstörung der Mikrokristalle durch Schmelze der Silbernitratauflage erfolgt und somit die Abscheidewirkung verloren geht und eine Aktivitätsfreisetzung auftritt.

Das Dokument DE 103 28 773 B3 offenbart ein zu WO 90/16071 ähnliches Verfahren und eine ähnliche Einrichtung.

Das Dokument DE 38 24 606 A1 offenbart einen Filter mit einer integrierten Beheizung, wobei zur Verhinderung einer Kondensatbildung an oder in dem Filter dessen Bestandteile auf die Taupunkttemperatur des durch ihn strömenden Dampf-Luft-Gemisches aufgeheizt werden.

Der Vorgang des Druckabbaus in der Sicherheitshülle durch (gefiltertes) Ausblasen von unter Überdruck stehendem Gas oder Dampf in die Atmosphäre wird auch als Venting bezeichnet. Dementsprechend wird der Entlastungsstrom auch als Ventgasstrom oder ähnlich bezeichnet.

In der Auslegung und den möglichen Aktivitätsabgaben unterscheiden sich die heutzutage betriebenen Anlagen von den neuen Reaktoren der dritten Generation (GEN 3) deutlich, da bei letzteren bereits die Kernschmelze in der Auslegung berücksichtigt wurde. Bereits nachgerüstete Einrichtungen, wie z. B. Wäscher oder Sandbettfilterkombinationen, lösen das neu zu bewertende Problem der Organo-jodrückhaltung und die anzustrebende weitgehende Druckentlastung für sich genommen nicht, insbesondere wegen der hohen erforderlichen Treibdrücke in Wäschern und der geringen Reaktionsflächen zum Stoffaustausch in der Flüssigkeitsphase sowie der sehr geringen Abscheidewirkung für Jod in Sandbetten oder Molekularsieben im Feuchtbetrieb. Eine Verbesserung dieser Einrichtungen, auch in bereits bestehenden Anlagen, ist zur Erreichung der höheren Sicherheitsstandards dieser Kernkraftwerke von essentieller Bedeutung.

Eine quantitative Abscheidung aller luftgetragenen Aerosol- und Jodaktivitäten würde auch eine wesentliche Kostenreduktion in GEN3-Anlagen ermöglichen, da die nicht rückhaltbaren Edelgasaktivitäten im Tagebereich zerfallen und somit eine mittelfristige Druckentlastung - ohne relevante Freisetzungen - möglich wird. Dies ermöglicht eine vereinfachte Auslegung des Containments und der zugehörigen Sicherheitssysteme und in der Folge erhebliche Kostenreduktionen.

Der vorliegenden Erfindung liegt daher die Aufgabe zugrunde, ein Verfahren zur Druckentlastung eines Kernkraftwerks der eingangs genannten Art anzugeben, das für eine besonders effiziente und wirksame Rückhaltung von im Entlastungsstrom enthaltenen Aktivitätsträgern, insbesondere von jodhaltigen organischen Verbindungen, ausgelegt ist. Es soll weiterhin ein zur Durchführung des Verfahrens besonders geeignetes Druckentlastungssystem für ein Kernkraftwerk angegeben werden.

Hinsichtlich des Verfahrens wird diese Aufgabe gemäß Anspruch 1 dadurch gelöst, dass der durch die Drosseleinrichtung entspannte Entlastungstrom unmittelbar vor seinem Eintritt in die Filterkammer durch einen Überhitzungsabschnitt geleitet wird, in dem er durch direkten oder indirekten Wärmeübertrag von dem noch nicht entspannten Entlastungsstrom im Hochdruckabschnitt auf eine Temperatur erhitzt wird, die mindestens 10 °C, vorzugsweise 20 °C bis 50 °C, über der dort vorliegenden Taupunkttemperatur liegt.

Überraschenderweise wurde gefunden, dass die starke Aktivität eines Gasstromes beim Druckentlasten eines Sicherheitseinschlusses durch eine der Drossel nachgeschaltete, besonders wirksame passiv-regenerative Gasüberhitzung mittels Wärmeübertrag aus dem Überdruckbereich in den atmosphärischen Bereich und eine anschließende Sorbensfilterung hocheffektiv zurückgehalten werden kann. Wie weiter unten noch im Detail ausgeführt wird, kann die Überhitzung des entspannten Entlastungsstroms im Niederdruckabschnitt dabei zum einen durch direkten Wärmeübertrag vom Hochdruckabschnitt der Entlastungsleitung mit dem Ventgas als Heizwärmeträger erfolgen (erste Hauptvariante: "trockene" Beheizung). Zum anderen kann eine indirekte, mehrstufige Wärmeübertragung über einen Waschflüssigkeitskreislauf eines strömungsmäßig in den Hochdruckabschnitt geschalteten Nassfilters / Wäschers mit der Waschflüssigkeit als intermediärem Heizwärmeträger, welcher seinerseits im Waschbehälter durch das Ventgas aufgeheizt wird, erfolgen (zweite Hauptvariante: "flüssige" Beheizung). Beide Varianten können auch miteinander kombiniert werden.

Die auch als Drosselventil oder Expansionsventil bezeichnete Drossel bewirkt eine erste Trocknung des Entlastungstroms infolge von Expansion, wobei die theoretische Drosseltemperatur durch noch enthaltene Gasfeuchten und nicht ideale Drosselung, je nach Betriebsphase, auch gravierend unterschritten werden kann. In dem der Drossel nachgeschalteten Überhitzungsabschnitt erfolgt dann - weitgehend unabhängig von der Effektivität der Expansionstrocknung - die entscheidende Überhitzung des Entlastungsstroms, durch die ein Auskondensieren im Bereich des feuchteempfindlichen Jodsorbensfilters auch unter ungünstigen Betriebsbedingungen sicher vermieden wird.

Durch die effektive Ausnutzung des im Hochdruckbereich der Entlastungsleitung vorhandenen Wärmeüberschusses zur Vorwärmung der Filterkammer einerseits und zur direkten Erwärmung des entspannten Entlastungsstroms unmittelbar vor seinem Filterkammereintritt andererseits kann gemäß dem Prinzip der regenerativen Wärmerückgewinnung mit Eigenmedium-Beheizung ein Einsatz von Fremdenergie, etwa in Form elektrischer Heizeinrichtungen, entfallen. Damit ist das Verfahren nicht nur hocheffektiv, sondern auch besonders energieeffizient.

Vorteilhafterweise wird der Entlastungsstrom im Überhitzungsabschnitt auf eine Temperatur erhitzt, die - bei unterstellten Auslegungs-Störfallbedingungen - mindestens 10 °C, vorzugsweise 20 °C bis 50 °C, über der dort vorliegenden Taupunkttemperatur liegt. Als Taupunkt oder Taupunkttemperatur bezeichnet man diejenige Temperatur, bei der sich im Entlastungsstrom ein Gleichgewichtszustand von kondensierendem und verdunstendem Wasser einstellt, mit anderen Worten die Kondensatbildung gerade einsetzt. Wie sich überraschenderweise herausgestellt hat, nimmt bei einem Taupunktabstand von > 10 °C, vorzugsweise > 20 °C, auch bei nur teilweise gereinigtem, stark dampfhaltigem Entlastungsstrom der Abscheidegrad für Organojod, insbesondere bei Verwendung von nicht wasserlöslichen Silberauflagen, sprunghaft zu und erreicht beispielsweise bei solchen Sorbensmaterialien auf Zeolith-Basis typischerweise Werte von bis zu 99,99 %.

Zwar würde für ein hocheffektives Molekularsieb mit (wasserlöslicher) Silbernitrat-Auflage unter Umständen bereits eine geringere Überhitzung von beispielsweise 5 °C über dem Taupunkt zur effektiven Organojod-Rückhaltung mit hohen Rückhalteraten ausreichen. Es hat sich jedoch gezeigt, dass ein solcher Prozess bei den aus dem Stand der Technik bekannten Anlagen stark abhängig vom weitgehenden Erreichen der theoretischen Drosseltemperatur ist, und von der Vermeidung von jeglichen Restfeuchtegehalten im Gas, die die Überhitzung gravierend minimieren, abhängt. Unter Berücksichtigung dieser neuen Erkenntnisse kann eine derartige Anlage herkömmlicher Bauart, wie sie beispielsweise aus der eingangs erwähnten WO 90/16071 bekannt ist, mit den ihr immanenten geringen Überhitzungen nicht effektiv und sicher betrieben werden. Hier schafft erst das erfindungsgemäße Konzept wirksame Abhilfe.

Bevorzugt wird die genannte Temperaturüberhöhung von mindestens 20 °C, besonders bevorzugt mindestens 50 °C über der Taupunkttemperatur im Volllastbetrieb des Druckentlastungssystems erreicht. Darunter ist der anfängliche Entlastungsbetrieb nach einem auslegungsgemäßen Störfall zu verstehen, wenn der Druck im Inneren des Containments am höchsten ist und typischerweise - je nach Reaktor- und Containment-Typ - etwa 3 bis 8 bar bar beträgt. Dabei werden Ventgas-Massenströme von typischerweise etwa 3 bis 10 kg/s erreicht. Die Taupunkttemperatur im Bereich des Sorbensfilters beträgt dann typischerweise je nach Dampfgehalt rund 80 bis 100 °C, so dass die Temperatur des Ventgases nach erfolgter Überhitzung beim Eintritt in den Sorbensfilter vorzugsweise rund 100 bis 170 °C beträgt. Im Teillastbetrieb, wenn die Ventgas-Massenströme rund 25 % der entsprechenden Werte im Volllastbetrieb betragen, beträgt die Temperaturerhöhung vorzugsweise immer noch mindestens 10 °C.

Besonders effektiv und kompakt kann hierbei die Jodsoptionsfilterung mit gleitender Überhitzung und inversen Verweilzeiten (kurze Verweilzeit bei hoher Überhitzung und lange Verweilzeiten bei geringerer Überhitzung) bis nahezu Atmosphärendruck - ohne Hilfsenergie - betrieben werden. Hierbei werden, im Falle hohen Containmentdruckes, nach der Drosselung ein hoher Volumenstrom erzeugt und trotz der resultierenden geringen Sorptionsfilterverweilzeiten, aufgrund der nun hohen Gasüberhitzung am Sorbens, optimale Reaktionsbedingungen bei gleichzeitig erhöhter Diffusion erreicht. Bei geringem Containmentdruck, beispielsweise einem Viertel des anfänglichen Maximaldrucks von z. B. 5 bar absolut wird nach der Drosselung auf nahezu atmosphärischen Druck ein geringer Volumenstrom mit reduzierter Gasüberhitzung erzeugt, aber aufgrund der nun rund (vierfach) höheren Sorptionsfilterverweilzeit, trotz ungünstiger Sorptionsbedingungen, ebenfalls eine effektive Jodsorption ermöglicht. Eine effektive Sorptionsfilterung ist hierdurch auch bis zur völligen Druckentlastung und bei Containment-Temperaturen von nur 50 °C bis 100 °C, aufgrund der nun noch weiter ansteigenden Sorptionsfilterverweilzeit, möglich.

In einer ersten Hauptvariante des Verfahrens wird der Entlastungsstrom im Hochdruckabschnitt zumindest teilweise an der Filterkammer vorbei geführt und diese dabei durch quasi direkten Wärmeübertrag vom heißen Ventgas ("trocken") beheizt. Das heißt in apparativer Hinsicht, dass der Hochdruckabschnitt der Entlastungsleitung zumindest in einem Teilabschnitt an der Filterkammer vorbeigeführt und über Wärmetauscherflächen thermisch an die Filterkammer gekoppelt ist, so dass die Filterkammer durch den im Hochdruckabschnitt vergleichsweiße heißen Entlastungsstrom beheizt wird.

In besonders bevorzugter Ausgestaltung wird der Entlastungsstrom im Hochdruckabschnitt vor der Vorbeiführung an der Filterkammer durch einen Waschflüssigkeit enthaltenden Waschbehälter ("Scrubber"), vorzugsweise mit Einströmdüsen vom Typ Venturiwäscher, geleitet. In apparativer Hinsicht heißt das also, dass der Waschbehälter stromaufwärts der vom Entlastungsstrom umströmten Filterkammer in den Hochdruckabschnitt der Entlastungsleitung geschaltet ist. Der Waschbehälter bewirkt eine effektive Feinfilterung der im Entlastungsstrom enthaltenen Aerosole, vorzugsweise mit einem Wirkungsgrad > 99 %, um die bei einem Störfall typischerweise in der Sicherheitshülle vorliegende Aerosolkonzentration von bis zu einigen g/m³ in einen unkritischen Bereich von beispielsweise wenigen mg/m³ zu reduzieren. Durch die effektive Nassfilterung der Aerosole werden relevante Ablagerungen an den strömungsmäßig nachgeschalteten Wärmetauscherflächen vermieden. Somit gelingt es, einen effektiven und konstant hohen Wärmeübergang zur Überhitzung des an der Drossel entspannten Entlastungsstroms und zur Beheizung des Sorbensfilters zu gewährleisten.

Die Einströmdüsen, durch die der Entlastungsstrom in den Waschbehälter eintritt, arbeiten dabei bevorzugt nach dem Prinzip der Venturi-Injektion: Der durch eine Verengungsstelle (Kehle) eines Düsenrohres strömende Gasstrom reißt über eine an der Verengungsstelle angeordnete, beispielsweise nach Art eines Ringschlitzes gestaltete Eintrittsöffnung im umliegenden Waschbehälter befindliche Waschflüssigkeit mit, so dass eine besonders intensive Vermischung zwischen dem Gasstrom und den eingesaugten bzw. mitgerissenen Waschflüssigkeitströpfchen nach Art einer (Feinst-) Verneblung stattfindet. Dabei lagern sich im Gasstrom mitgeführte Aerosol- und andere Partikel in den Waschflüssigkeitströpfchen ein. Nach dem Austritt aus der Düse separieren sich die Waschflüssigkeit und der Gasstrom wieder, vor allem aufgrund der Schwerkraftwirkung, und der solchermaßen gereinigte und von Aerosolen befreite Gasstrom verlässt den Waschbehälter über eine entsprechende, zur nachgeschalteten Wärmetauscher- und Sorbensfilter-Einheit führende Gasaustrittsleitung. Die Gasaustrittsleitung ist dazu zweckmäßigerweise oberhalb des sogenannten Poolbereiches, also oberhalb des im Betrieb vorhandenen Waschflüssigkeitsspiegels und oberhalb der Auswurf- und Separationszone, an den Waschbehälter angeschlossen.

Alternativ oder zusätzlich können selbstverständlich auch gewöhnliche, in die Waschflüssigkeit gerichtete oder eintauchende Einströmdüsen vorgesehen sein. Des Weiteren können in dem Poolbereich des Waschbehälters geeignete Strömungseinbauten, Wirbelerzeuger, Mischer, Packer und dergleichen angeordnet sein, welche die für die (temporäre) Vermischung von Ventgas und Waschflüssigkeit relevante Grenzfläche bzw. innere Oberfläche zwischen beiden vergrößern.

Bevorzugt sind die Einströmdüsen sowie die Entlastungsleitung stromaufwärts der Einströmdüsen derart gestaltet und dimensioniert, dass der Entlastungsstrom mit einer Strömungsgeschwindigkeit von mehr als 100 m/s durch die Einströmdüsen in den Waschbehälter geleitet wird. Im Falle der Hochgeschwindigkeits-Venturi-Abscheidung sollen derartige Geschwindigkeiten insbesondere an den Verengungs- bzw. Kehlstellen der Venturirohre, wo sich die Einströmöffnungen für die Waschflüssigkeit befinden, erreicht werden.

Vorteilhafterweise wird die Waschflüssigkeit im Waschbehälter durch Zugabe von Lauge, vorzugsweise Natronlauge, und /oder Natriumthiosulfat, vorzugsweise als wässrige Natriumthiosulfatlösung, chemisch konditioniert. Dadurch wird eine relevante Erhöhung der Rückhaltung der im Ventgasstrom enthaltenen Aktivitäten, primär des elementaren Jods, bewirkt. Zu diesem Zweck sind dem Waschbehälter entsprechende Dosiereinrichtungen und Injektoren zugeordnet, über die ggf. auch noch andere Chemikalien zugegeben werden können.

Des Weiteren wird der Waschflüssigkeit vorteilhafterweise ein Oberflächenreaktionsbeschleuniger, insbesondere in Form von Aminen, beigemischt, der die Einlagerung / Bindung der im Ventgasstrom mitgeführten Aerosole in / an die Waschflüssigkeit fördert.

Zwischen dem Waschbehälter und der Wärmetauscher-Sorbensfilter-Einheit können noch weitere Filterelemente in den Hochdruckabschnitt der Entlastungsleitung geschaltet sein, insbesondere als Feinfilter wirksame Metallfaser- oder Kerzenfilter, um den Aerosolgehalt im Entlastungstrom vor dem Passieren der Wärmetauscherflächen noch weiter zu vermindern. Derartige Filterelemente können auch baulich in den Waschbehälter integriert sein und sind dann zweckmäßigerweise oberhalb des Poolbereiches angeordnet. Falls derartige Filter für einen (bevorzugten) Trockenbetrieb ausgelegt sind, sind ihnen zweckmäßigerweise Flüssigkeitsabscheider bzw. Separatoren zur Entfeuchtung des Gasstroms vorgeschaltet.

In einer alternativen Variante des Verfahrens wird der Entlastungsstrom einer Kondensationskammer eines Reaktors, insbesondere eines Siedewasserreaktors, entnommen und von dort ohne Zwischenschaltung eines (externen) Waschbehälters an der Filterkammer und/oder dem Überhitzungsabschnitt zu deren Beheizung vorbei geführt. Das heißt in apparativer Sprechweise, dass die Entlastungsleitung einströmseitig an die Kondensationskammer angeschlossen ist.

Unter einer Kondensationskammer versteht man in diesem Zusammenhang üblicherweise einen durch eine gasdichte Trennwand vom übrigen Containment-Innenraum (sogenannte Druckkammer) abgetrennten, teilweise mit Flüssigkeit (Kondensat) gefüllten Teilraum, der über ein in die Flüssigkeit eintauchendes, als Kondensationsrohr bezeichnetes Überströmrohr mit dem übrigen Containment-Innenraum verbunden ist. Dabei ist im Normalbetrieb des Kernreaktors das Überströmrohr durch einen Flüssigkeitspfropfen verschlossen. Bei einem Störfall mit nennenswerter Freisetzung von Dampf sowie nicht-kondensierbaren Gasen und entsprechendem Druckaufbau in der Druckkammer kann das Gas/Dampf-Gemisch über das Überströmrohr in die Kondensationskammer eintreten, wobei der Dampfanteil dann größtenteils kondensiert. Die nicht-kondensierten Anteile sammeln sich oberhalb des Flüssigkeitsspiegels in der Kondensationskammer und werden gemäß der hier beschriebenen Variante der Erfindung von dort über die Entlastungsleitung als Entlastungsstrom aus der Kondensationskammer und der Sicherheitshülle herausgeführt.

Der Begriff "Kondensationskammer" soll in diesem Zusammenhang auch andere Kondensationspools mit ähnlicher Wirkungsweise umfassen, z. B. Kondensationsrinnensysteme eines Wasser-Wasser-Energie-Reaktors (WWER) russischer oder anderer Bauart.

Da die Kondensationskammer gewissermaßen selber als Wäscher und Aerosolfilter für den Entlastungstrom wirkt, kann daher in bevorzugter Ausführung auf einen separaten, außerhalb des Containments angeordneten Waschbehälter der oben beschriebenen Art verzichtet werden.

Die Anordnung des den Überhitzungsabschnitt bildenden Regenerativ-Wärmetauschers und der Filterkammer mit dem Sorbensfilter erfolgt für einen guten Wärmeübertrag vorzugsweise in unmittelbarer Nähe mit Abständen < 5 m, oder günstigerweise integriert innerhalb einer Komponente. Hierbei kann die Kombination innerhalb eines Druckbehälters in verschiedenen Kammern angeordnet werden, um Wärmeverluste und Aufwand zu minimieren und die optimalen Überhitzungs- und Reaktionsbedingungen sicherzustellen.

Vorzugsweise erfolgt in der oben genannten ersten Hauptvariante des Verfahrens die Anordnung des Sorbensfilters in einer die Zentralkammer umgebenden Ringkammer mit bereits integrierter Gasbeheizung durch die Wärmetauscherrohre. Die Ringkammer weist beispielsweise Lochrohrblechsiebe mit dem Sorbens auf. Eine Sorbensabrieb-Rückhaltung mittels Faserfilter kann dem Sorbensfilter nachgeschaltet sein. Alternativ kann eine weitgehend drucklose Flachfilterkammerkonstruktion mit zwischengeschalteten Regenerativwärmetauscher-Elementen vorgesehen sein. Hierbei ist ein modularer Aufbau durch Zusammenfügen von mehreren Modulen möglich. Die Beheizung der Sorptionseinheit erfolgt hier unmittelbar vor dem Durchströmen; günstigerweise sind die Filterkammern noch teilweise medium-außenbeheizt.

In besonders vorteilhafter Ausgestaltung wird der Entlastungsstrom zumindest teilweise durch eine Zentralkammer geleitet, die von der Filterkammer umgeben ist oder an sie angrenzt, wobei der vergleichsweise stark komprimierte Entlastungsstrom im Hochdruckabschnitt durch in der Zentralkammer angeordnete oder in sie hineinragende Wärmetauscherelemente, insbesondere Wärmetauscherrohre, geleitet wird, und wobei der entspannte, vergleichsweise großvolumige Entlastungsstrom im Überhitzungsabschnitt außen an den Wärmetauscherelementen vorbei durch die Zentralkammer geleitet wird. Das heißt, der stromaufwärts der Drossel noch unter Hochdruck stehende, heiße Entlastungsstrom (ggf. auch nur ein Teilstrom desselben) gibt einen wesentlichen Teil seiner Wärme nach außen an den um die Wärmetauscherrohre herum geführten, bereits entspannten Entlastungstrom und damit indirekt auch an die noch weiter außen liegende Filterkammer zur Vorwärmung der Sorbens-Filterelemente ab.

In apparativer Hinsicht heißt das, dass die Filterkammer zweckmäßigerweise eine Zentralkammer umgibt oder an sie angrenzt, wobei ein oder mehrere durchström-bare Wärmetauscherelemente in der Zentralkammer angeordnet sind oder in diese hineinragen, und wobei die Strömungsführung in der Entlastungsleitung derart ausgestaltet ist, dass der Entlastungsstrom im Hochdruckabschnitt durch die Wärmetauscherelemente hindurch geleitet und im Überhitzungsabschnitt außen an den Wärmetauscherelementen vorbei durch die Zentralkammer geleitet wird. Zweckmäßigerweise sind dabei ein oder mehrere Durchtrittsöffnungen zwischen der Zentralkammer und der Filterkammer vorgesehen, die den Filterkammereinlass bilden.

Für eine besonders effektive Wärmeübertragung sind die Wärmetauscherelemente bevorzugt als Wärmetauscherrohre ausgebildet und zweckmäßigerweise an ihrer Außenseite mit in regelmäßigen Abständen angeordneten, umlaufenden oder in Längsrichtung verlaufenden Rippen oder Vorsprüngen versehen. Auch an der Innenseite der der Wärmetauscherrohre können entsprechende Strukturen oder Einbauten zur Turbulenzerzeugung oder zur Ausbildung einer Drallströmung vorgesehen sein.

Vorteilhafterweise wird der Entlastungsstrom im Überhitzungsabschnitt im Gegenstrom oder Kreuzgegenstrom zu dem Entlastungsstrom im Hochdruckabschnitt geführt. In apparativer Hinsicht heißt das beispielsweise, dass die den Überhitzungsabschnitt bildenden Wärmetauscherrohre mit entsprechender Ausrichtung, etwa als im Wesentlichen vertikale Rohre oder als zickzackförmig gebogene Rohre, in der Zentralkammer angeordnet sind oder in sie hineinragen.

Durch Ausführung der Heizflächen als schmutzabweisende, glatte Oberflächen, mit strahlenbeständigen Beschichtungen oder glatten Edelstahloberflächen, oder zusatzbehandelt, wie z. B. poliert, elektropoliert, und die Integration von Kondensat-Verteilungssystemen im Wärmetauscherbereich, wie z. B. Böden- oder Rinnensystemen und/oder Spraysystemen, wird dauerhaft ein effektiver Wärmeübergang wirkungsvoll unterstützt.

Zur noch intensiveren Vorwärmung kann über eine zusätzliche Wärmetauschereinrichtung (Rohre oder Ringkammer) ein Teilstrom des Hochdruck-Entlastungsstroms von der Entlastungsleitung, insbesondere noch vor dem Waschbehälter, entnommen werden und zur Beheizung direkt durch den Sorbensfilter oder zu einen ihm strömungsmäßig vorgeschalteten Bereich geführt werden. Hierdurch gelingt es, insbesondere in Situationen mit deutlich überhitzter Containment-Atmosphäre, eine weitere Erhöhung der Betriebstemperaturen am Sorbens zu erreichen und die Organojodrückhaltung noch weiter zu verbessern.

Vorteilhafterweise wird in dem Hochdruckabschnitt eine Strömungsgeschwindigkeit des Entlastungsstroms im Bereich von 10 m/s bis 50 m/s eingestellt. In dem Überhitzungsabschnitt wird bevorzugt eine Strömungsgeschwindigkeit des Entlastungsstroms im Bereich von 10 m/s bis 70 m/s eingestellt. Der freie Strömungs-querschnitt der Drossel wird zweckmäßigerweise derart eingestellt, dass der Druck im Hochdruckabschnitt das zwei- bis fünffache des Drucks im Überhitzungsabschnitt beträgt. Insbesondere wird damit bei Vorhandensein einer (Venturi-) Wascheinrichtung im Hochdruckabschnitt die dort bei einem Druck von rund 7 bis 1 bar erfolgende Nassfilterung des Entlastungsstroms vorzugsweise bei dem zwei bis fünffachen des Molekularsiebdruckes am Sorbensfilter, der annähernd auf Atmosphärenniveau liegt, betrieben.

Wie oben bereits erwähnt, wird das aerosolhaltige Ventgas im Hochdruckabschnitt vorteilhafterweise durch die Wärmetauscherrohre hindurch geleitet, die günstigerweise in einem kanalähnlichen Gebilde (Zentralkammer) zur Erzeugung hoher Gasgeschwindigkeiten, insbesondere > 10 m/s, angeordnet sind. Wärmeübertragungselemente (Rippen) auf der Rohgasseite sind bevorzugt mit einem Abstand von > 1 mm, besonders bevorzugt > 5 mm, und vorwiegend vertikal ausgerichtet, ausgeführt. Durch die Wahl einer entsprechend überdimensionierten Austauschfläche auf der Aerosolgasseite, mit zusätzlicher Heizflächenreserve von > 100 %, besonders robust und betriebssicher sind > 500 % (bezogen auf den Wert ohne Fouling), kann ein sicherer Betrieb gewährleistet werden. In der Wärmetauschereinheit kann hierbei weiterhin auch gezielt eine Teilfilterung von Aerosolen und Jod erfolgen.

Die Gasführung der aerosolhaltigen Gase durch die Wärmetauscherrohre wird ermöglicht bei einer Ausführung als Glattrohrwärmetauscher und besonders hohen Strömungsgeschwindigkeiten, von z. B. > 10 m/s bis 50 m/s, so dass relevante Ablagerungen in den Rohren vermieden werden können. Auf der entspannten, atmosphärischen Seite werden, bei maximalen Durchsatzphasen, ebenfalls sehr hohe Gasgeschwindigkeiten von > 10 m/s bis zu 70 m/s eingestellt, so dass hohe Wärmeübergangswerte erreicht und sehr kompakte Komponenten ermöglicht werden.

Eine Hochgeschwindigkeits-Regenerativ-Wärmerückgewinnung kann bevorzugt bei einer Ausführung des Wärmetauschers gemäß Gegen- oder Kreuzgegenstromprinzip, als Rippenrohr- oder Plattenwärmetauscher verwirklicht werden. Zur Erreichung eines effektiven Wärmeüberganges in Fällen mit geringem Durchsatz sind in/an den Rohren zur Erzeugung turbulenter und/oder drallbehafteter Strömungsbedingungen bevorzugt entsprechende Einbauten oder strukturierte Rohroberflächen (Rippen etc.) vorgesehen. Hierbei gelingt es, eine Rückwärmezahl von > 0,5 bei hohem Containmentdruck und Durchsatz, die anschließend auf bis zu 0,8 bei niedrigem Containmentdruck und geringem Durchsatz gesteigert werden kann, mit sehr kompakten Einheiten zu erreichen.

Zweckmäßigerweise ist die Zentralkammer der Wärmetauscher-Sorbensfilter-Einheit im Bodenbereich mit einem Kondensatsammelbecken für sich im Betrieb bildendes Kondensat verbunden. Durch die Injektion oder Vorlage von Natriumhydroxid bzw. Natronlauge (NaOH) und/oder Natriumthiosulfat (Na₂S₂O₃) und/oder Calciumperoxid (CaO₂) in das Kondensat, etwa im Bereich des Kondensatsammelbeckens, oder durch Einsprühen in die Zentralkammer kann zusätzlich eine relevante Erhöhung der Jodabscheidung im Niederdruckabschnitt des Regenerativ-Wärmetauschers erfolgen. Des Weiteren kann auf diese Weise die Filterung bzw. Rückhaltung von chlorhaltigen Gasen begünstigt werden.

In besonders bevorzugter Ausgestaltung des Druckentlastungssystems ist innerhalb der Sicherheitshülle, alternativ oder zusätzlich auch außerhalb der Sicherheitshülle, ein Vorfilter (Trockenvorfilter) zur Aerosolgrobfilterung des Entlastungsstromes angeordnet. Vorteilhafterweise ist parallel zu dem Vorfilter eine mit einem regelbaren Ventil verschließbare Bypassleitung geschaltet, so dass der Entlastungsstrom bedarfsweise unter teilweiser oder vollständiger Umgehung des Vorfilters aus der Sicherheitshülle zu den außerhalb befindlichen Filtersystemen geleitet werden kann.

Beim Venten der Sicherheitshülle kann der stark aktivitätshaltige Gasstrom also durch den Vorfilter geleitet werden, wo beispielsweise mittels metallischer Tiefbett-Filterkerzen oder Metallfaserfiltern eine weitgehende Filterung der Grobaerosole mit Durchmessern von > 1 µm (Rückhalterate vorzugsweise > 90 %) und eine Teilfilterung der quantitativ geringen Feinaerosolanteile mit Durchmessern < 1 µm (Rückhalterate vorzugsweise > 50 %) erfolgt. Die Vorfilterung wird vorzugsweise bei dem zwei- bis fünffachen des Drucks am Sorbensfilter (Molekularsieb), im Druckbereich von z. B. 7 bis 1 bar, betrieben.

Um die möglichen Druckverluste am Vorfilter zu begrenzen und insbesondere bei Vorhandensein einer nachgeschalteten (Venturi-) Wascheinrichtung an den Einströmdüsen, etwa Venturidüsen, vergleichsweise hohe Einströmgeschwindig-keiten einstellen zu können, ist bedarfsweise ein Bypassbetrieb unter Umgehung des Vorfilters vorgesehen. Die Öffnung des Bypasses erfolgt vorzugsweise automatisch und passiv (das heißt ohne Einsatz von Fremdenergie), durch Integration einer Überdruckbegrenzungseinrichtung, wie z. B. einer Berstscheibe oder einer federbelasteten Überströmventileinrichtung. Der Öffnungsmechanismus kann beispielsweise so eingestellt sein, dass die Bypassleitung freigegeben wird, wenn der Druckverlust am Vorfilter einen Wert von > 0,5 bar übersteigt. Durch die bei geschlossener Bypassleitung mittels des Vorfilters bewirkte Rückhaltung der überwiegenden Menge der Aerosole aus der anfänglichen Hochkonzentrationsphase des Unfalles kann dann in der späteren Unfallphase bei geöffneter Bypassleitung ein effektiver Betrieb der regenerativen Wärmetauschereinrichtung - auch ohne Vorfilter - ermöglicht werden.

Vorteilhafterweise werden die relevanten Anlagenkomponenten derart dimensioniert und die Betriebsparameter im Entlastungsbetrieb so gewählt, dass der durch den ggf. vorhandenen Vorfilter und den Regenerativ-Wärmetauscher im Hochdruckabschnitt bewirkte Druckverlust insgesamt < 30 % des verfügbaren Gesamtdruckverlustes bis zur Freisetzung in die Atmosphäre beträgt, um ein hohes Temperaturniveau für die Regenerativbeheizung zu gewährleisten.

In einer vorteilhaften Ausführungsvariante ist eine Zusatzheizeinrichtung, insbesondere eine elektrische Heizeinrichtung oder eine mit Prozessdampf aus einer anderen Anlage betriebene Heizeinrichtung, zur Beheizung des Entlastungsstroms in der Entlastungsleitung vorgesehen, die zweckmäßigerweise unabhängig von den Betriebsbedingungen im Regenerativ-Wärmetauscher und im Überhitzungsabschnitt einstellbar bzw. regelbar ist. Diese Heizeinrichtung kann etwa stromabwärts der Drossel angeordnet sein. Alternativ oder zusätzlich können derartige Heizelemente auch stromaufwärts der Drossel im Hochdruckabschnitt der Entlastungsleitung angeordnet sein. Vorteilhaft ist beispielsweise eine Anordnung im Waschbehälter (sofern vorhanden), etwa im Waschflüssigkeitspool oder darüber, z. B. in der Auswurfzone oder im Bereich von ggf. vorhandenen Separatoren / Zusatzfiltern.

Eine derartige Zusatzbeheizung des Entlastungsstroms kann auch durch einen zweiten, vorher mittels des Entlastungsstromes oder durch separate Hilfsenergiequellen aufgeheizten Wärmespeicher erfolgen. Diese Einrichtungen können auch zur Überbrückung des Anfahrbetriebes genutzt werden.

In einer weiteren zweckdienlichen Variante ist zwischen der Drosseleinrichtung und dem Überhitzungsabschnitt ein Gastrockner bzw. ein Trocknungskühler in die Entlastungsleitung geschaltet, der eine zusätzliche Trocknung und Taupunktabsenkung des Entlastungsstroms vor seinem Eintritt in den Überhitzungsabschnitt bewirkt. Die Kühlleistung eines solchen Trocknungskühlers beträgt zweckmäßigerweise < 25 % der Kühlleistung des Regenerativ-Wärmetauschers, vorzugsweise < 10 %.

Hierdurch wird in Betriebsfällen mit bereits geringem Containmentdruck und niedrigen Temperaturen, sprich mit nur geringem Überhitzungspotential, wie etwa auch beim Anfahren, in der zwischengeschalteten Kühleinrichtung der Taupunkt durch Teilkondensation und Wärmeabgabe an die Umgebung oder auch an aufzuheizende Massen mit entsprechender Wärmekapazität abgesenkt. In dem nachfolgenden Überhitzungsabschnitt kann nun durch Aufheizung des Entlastungsstroms auf nahezu Hochdruck-Prozesstemperatur ein deutlicher Taupunktabstand sichergestellt werden.

Weiterhin kann zwischen der Drosseleinrichtung und dem Sorbensfilter eine (zusätzliche) Wascheinrichtung in die Entlastungsleitung geschaltet sein, die für eine Rückhaltung von chlorhaltigen und/oder nitrosen Gasen ausgelegt ist, so dass der Entlastungsstrom nach seiner Entspannung an der Drosseleinrichtung und vor dem Passieren des Sorbensfilters in der Wascheinrichtung entsprechend gereinigt wird.

In vorteilhafter Ausgestaltung ist ein Sauggebläse mit Elektro- oder Verbrennungsmotorantrieb in die Entlastungsleitung geschaltet bzw. bedarfsweise zuschaltbar, so dass insbesondere im Langzeitbetrieb des Druckentlastungssystems, d. h. wenn der anfänglich nach einem Störfall vorhandene hohe Containment-Innendruck bereits weitgehend abgebaut ist, der Entlastungsstrom "aktiv" durch das Saugebläse aus der Sicherheitshülle durch die Entlastungsleitung mit den darin befindlichen Filtereinrichtungen angesaugt wird. Mit anderen Worten kann durch die Zuschaltung eines Sauggebläses das Filtersystem im Langzeit-Nachstörfallbetrieb auch aktiv betrieben oder auch gezielt zur Unterdruckhaltung des Containments genutzt werden, um somit ungefilterte Containment-Außenleckagen vollständig zu vermeiden.

Durch die oben genannten Maßnahmen, insbesondere durch die Gastrocknung und die dadurch bewirkte Erhöhung des Taupunktabstandes, kann nunmehr eine relevante Belegung der großen inneren Reaktionsoberfläche des Sorbensfilters mit wasserhaltigem Dampf, sowohl im Makro- als auch im Mikroporenbereich des Sorptionsmittels, sicher vermieden werden und somit die Jodrückhaltung durch Adsorption an den Oberflächen und ggf. Chemiesorption am Sorbensmaterial besonders effektiv erfolgen.

In vorteilhafter Ausgestaltung, insbesondere bei vorhandener Nassfilterung im Hochdruckabschnitt durch eine entsprechende Wäschereinrichtung, ist in die Entlastungsleitung eine Bypassleitung zur Umgehung der Filterkammer geschaltet. Dabei ist zweckmäßigerweise der durch die Bypassleitung strömende Anteil des Entlastungsstroms durch geeignete Stellmittel einstellbar. Dadurch ist eine Betriebsweise des Druckentlastungssystems ermöglicht, bei der ein (einstellbarer) Teilstrom des Entlastungsstroms über die Bypassleitung unter Umgehung der Filterkammer und des darin angeordneten Jodsorbensfilters direkt in die Atmo-sphäre ausgeblasen wird. Zur Druckanpassung ist zweckmäßigerweise ein geeignetes Druckminderungsventil in die Bypassleitung geschaltet.

Hierdurch kann bei sehr hohen Durchsätzen, z. B. in frühen Unfallphasen mit großen Gasmengen und wenig Organojodanfall und weitgehender Abscheidung des in dieser Phase dominanten elementaren Jods in der vorgelagerten Wäscher-einrichtung, eine effektive Rückhaltung der Gesamtaktivitäten erfolgen, ohne dass der Jodsorbensfilter übermäßig stark in Anspruch genommen werden muss. In späteren Phasen - mit zwischenzeitlich einsetzender relevanter Organojodbildung und nunmehr vergleichsweise geringerem Gasanfall - erfolgt dann vorteilhafter-weise bei weitgehend oder vollständig geschlossener Bypassleitung die Voll-stromfilterung unter Einbeziehung des Jodsorbensfilters, um weiterhin die hohe Rückhaltung der Gesamtaktivitäten sicherzustellen.

Die Sorbensmaterialien bzw. Sorbensien sind vorzugsweise mit > 50 m²/g innerer Oberfläche und aus anorganischen Materialen ausgeführt. Durch das nun permanent wirkende Überhitzungsverfahren wird somit selbst der Einsatz von Sorbensmaterialien mit feuchteempfindlicher (wasserlöslicher) Silbernitrat-Belegung oder Dotierung möglich.

Beispielsweise ermöglicht eine Verwendung von silberimprägnierten keramischen Produkten, z. B. Silicagel, dauerhaft eine sehr effiziente Jodabscheidung von > 99,9 % zu erzielen. Das Molekularsieb kann beispielsweise auch auf Zeolith-Basis oder mit einem anderen, vorzugsweise anorganischen Trägerkörper hergestellt und mit Silbernitrat (AgN0₃) belegt oder dotiert sein, welches bei Jodanfall beispielsweise zu Silberjodid umgesetzt wird. Dies ist allerdings nur dann günstig, wenn eine ausreichende Überhitzung des Entlastungsstroms in allen Betriebsphasen gewährleistet werden kann. Vorteilhafterweise kann hierbei auch die Organojod-Rückhaltung in verunreinigten Gasen, z. B. stickoxidhaltigen Gasen und dergleichen, hocheffektiv erfolgen.

Als robusteres Filtermaterial kann ein künstlicher Zeolith, in den beispielsweise durch Ionenaustausch Silber- und/oder Schwermetallkationen in das dreidimensionale Kristallgitter eingebracht wurden, verwendet werden. Es sind auch Kombinationen von bindemittelfreien Zeolithen, vorzugsweise mit offener Struktur, möglich. Solch ein binderfreies Molekularsieb, z. B. vom Strukturtyp Faujasitstruktur, ist noch betriebssicherer, auch in stark überhitzter Dampfatmosphäre von z. B. > 200 °C, und auch bei kurzzeitigen Wasserdampfsorptionsbedingungen (Feuchtbetrieb). Ein kurzzeitiger Feuchtbetrieb führt also nicht zur Zerstörung dieser beispielsweise mit Silber dotierten Zeolithe. Ebenso kann ein geringer Laugeneintrag toleriert werden. Weiterhin wird durch Feuchteadsorption eine (zusätzliche) kurzzeitige Gasüberhitzung erreicht.

Besonders bevorzugt ist es, wenn der Sorbensfilter ein Sorbensmaterial auf Zeolith-Basis als Mischung von Zeolithen mit nicht-wasserlöslicher Dotierung, insbesondere einer Silberdotierung, und anorganischen Sorbensmaterialien mit wasserlöslicher Dotierung, etwa einer Silbernitrat-Dotierung, umfasst. Hierbei erfolgt vorteilhafterweise auch in kurzen Feuchtphasen die Wasserdampfadsorption ausschließlich oder jedenfalls primär am Zeolith, wobei die temporär auftretende Freisetzung von Adsorptionswärme prozessförderlich ist, so dass ein Herauslösen der wasserlöslichen Substanzen, wie etwa Silbernitrat, nun sicher vermieden werden kann. Diese Kombination als Mischung von beispielsweise sowohl Zeolithen mit einer Silberdotierung als auch eines Molsiebes mit einer Silbernitrat-Dotierung und/oder auch auf einem gemeinsamen Trägerkörper untergebracht erweist sich durch den dualen Abscheidemechanismus als hoch effizient und betriebssicher.

Ferner können als geeignete Sorbensmaterialien für eine besonders effektive und ökonomische Jodrückhaltung auch phosphazene Moleküle, phosphazene Zeolithe, insbesondere cyclo-triphosphazene Zeolithe, Kanaltyp-Kristalle, ggf. mit zusätzlicher Dotierung, Verwendung finden.

In bevorzugter Ausgestaltung kann die Filterkammer neben dem Jodsorbensfilter auch noch weitere Filtereinrichtungen und Rückhalteeinrichtungen enthalten, etwa zur Rückhaltung von chlorhaltigen und /oder nitrosen Gasen und/oder von ölhaltigen Verbindungen. Hierzu können beispielsweise Sandbettfilter vorgesehen sein sowie ggf. die Eindüsung oder Vorlage geeigneter Chemikalien.

Zusätzlich kann hierbei in bestimmten Betriebsphasen durch gezielte partielle Adsorption von Wasserdampf an den vorgenannten Zeolithen (Erhöhung der Feuchte um z. B. < 2 Gewichtsprozent durch Sorption) eine weitere kurzzeitige Gasüberhitzung erreicht und somit die gewünschte kontinuierliche Organojod-Rückhaltung gewährleistet werden. Dies ist insbesondere im Anfahrbetrieb von Interesse (so genannte Anfahr-Adsorption). Zur Begrenzung der Temperaturen bei Feuchteanfall kann weiterhin auch eine gezielte Begrenzung der katalytischen Aktivität dieser Sorbensien, beispielsweise durch Diffusionsschichten oder Mischdotierung (etwa mit Silber- und/oder Schwermetallkationen) und ggf. mit nichtkatalytischen Zusätzen, vorgenommen werden.

Wie bereits weiter oben angedeutet, wird vorteilhafterweise im Anfahrbetrieb des Druckentlastungssystems - bei noch vergleichsweise geringen Betriebstemperaturen - im Sorbensfilter eine zumindest partielle Dampfadsorption zugelassen und die Adsorptionswärme zur Überhitzung des Entlastungsstromes und des Sorbensfilters genutzt. Dies ist allerdings nur dann sinnvoll, wenn der Sorbensfilter hinreichend feuchteunempfindlich ist, also z. B. auf Zeolith-Basis mit nichtlöslicher Dotierung aufgebaut ist.

In einer zweiten Hauptvariante des Verfahrens, die auf dem Vorhandensein eines Waschbehälters zur Nassfilterung des Entlastungstroms im Hochdruckabschnitt aufbaut, wird die Waschflüssigkeit aus dem Waschbehälter durch eine Zirkulationsleitung geführt, die zumindest in einem Teilabschnitt im thermischen Kontakt mit der Filterkammer steht und diese durch Wärmeübertrag von der zirkulierenden Waschflüssigkeit beheizt. Das heißt in apparativer Hinsicht, dass an den Waschbehälter eine Zirkulationsleitung zur Zirkulation von Waschflüssigkeit angeschlossen ist, wobei die Zirkulationsleitung an der Filterkammer vorbei geführt ist und im thermischen Kontakt mit ihr steht, so dass ein Wärmeübertrag von der zirkulierenden Waschflüssigkeit auf die Filterkammer erfolgt.

Das bedeutet also, dass die im Hochdruckabschnitt der Entlastungsleitung vom Ventgasstrom mitgeführte Wärmemenge im Waschbehälter zu einem großen Teil auf die Waschflüssigkeit übertragen wird, die dann durch die Filterkammer hindurch oder an ihr vorbei zirkuliert, wo ein erneuter Wärmeübergang zur Beheizung der Filterkammer mit dem Sorbensfilter und/oder zur Überhitzung des durch die Drossel entspannten Entlastungsstroms unmittelbar vor dessen Eintritt in den Sorbensfilter erfolgt.

Besonders bevorzugt ist es, wenn der durch die Drossel entspannte Entlastungsstrom im Überhitzungsabschnitt im thermischen Kontakt mit der Zirkulationsleitung steht und durch Wärmeübertrag von der zirkulierenden Waschflüssigkeit erhitzt wird. Dazu ist der Überhitzungsabschnitt der Entlastungsleitung über Wärmetauscherflächen thermisch an die Zirkulationsleitung angekoppelt, so dass dort ein Wärmeübertrag von der zirkulierenden Waschflüssigkeit auf den Entlastungsstrom erfolgt.

In bevorzugter Ausgestaltung wird die Strömung der Waschflüssigkeit durch die Zirkulationsleitung durch den im Waschbehälter von dem Entlastungstrom auf die Waschflüssigkeit übertragenen Impuls angetrieben. Dazu ist zumindest eine der Einströmdüsen in geeigneter Weise ausgerichtet, etwa auf den Einlass der Zirkulationsleitung gerichtet, so dass der auf die Waschflüssigkeit übertragene Impuls des durch ihn strömenden Entlastungsstroms die Zirkulation der Waschflüssigkeit durch die Zirkulationsleitung antreibt. Alternativ oder zusätzlich können aber auch entsprechende motorbetriebene Pumpen vorgesehen sein, um den Zirkulationsstrom anzutreiben oder zu unterstützen.

Vorteilhafterweise weist die Zirkulationsleitung einen in den Waschbehälter mündenden Waschflüssigkeitseinlass und einen in Relation zum Waschflüssigkeitseinlass höher liegenden, ebenfalls in den Waschbehälter mündenden Waschflüssigkeitsauslass auf. Auf diese Weise wird die dem Waschbehälter entnommene Waschflüssigkeit nach dem Durchströmen der Zirkulationsleitung dem Waschbehälter an geodätisch höher liegender Stelle wieder zugeführt.

Bevorzugt wird die Waschflüssigkeit an einer Stelle aus dem Waschbehälter entnommen, an der der Gehalt von Entlastungsstrom-Gasblasen besonders hoch ist, also z. B. im Auswurfbereich der Einströmdüsen.

In bevorzugter Ausgestaltung ist eine Zentralkammer vorgesehen, die die Filterkammer umgibt oder an sie angrenzt, wobei die zirkulierende Waschflüssigkeit durch in der Zentralkammer angeordnete oder in sie hineinragende Wärmetauscherelemente, insbesondere Wärmetauscherrohre, geleitet wird, und wobei der Entlastungstrom im Überhitzungsabschnitt außen an den Wärmetauscherelementen vorbei durch die Zentralkammer geleitet wird. Die durch die Wärmetauscherrohre strömende Waschflüssigkeit gibt also einen großen Teil ihres Wärmegehalts an den außen an den Rohren vorbeiströmenden Niederdruck-Entlastungsstrom ab, der dabei vor dem Filterkammereintritt überhitzt wird. Darüber hinaus gibt der auf diese Weise überhitzte Niederdruck-Entlastungsstrom vor dem Filterkammereintritt einen geringeren Teil seines Wärmegehalts an die weiter außen liegende Filterkammer ab, die dadurch gewissermaßen vorgeheizt wird.

Weiterhin ist es günstig, wenn der Niederdruck-Entlastungsstrom in der Zentralkammer im Gegenstrom oder Kreuzgegenstrom zu der durch die Wärmetauscherelemente strömenden Waschflüssigkeit geführt wird.

Ferner ist vorteilhafterweise vorgesehen, dass der Entlastungsstrom mit vertikaler Hauptströmungsrichtung von oben nach unten durch die Zentralkammer strömt und die Waschflüssigkeit mit vertikaler Hauptströmungsrichtung von unten nach oben durch die Wärmetauscherelemente strömt.

Bevorzugt wird eine Strömungsgeschwindigkeit der Waschflüssigkeit in der Zirkulationsleitung von mehr als 1 m/s, vorzugsweise von mehr als 3 m/s, eingestellt, so dass Ablagerungen aus der Waschflüssigkeit weitgehend vermieden werden können und ein besonders effektiver Wärmeübergang gelingt.

Mit anderen Worten: Die als Wärmeträger dienende Waschflüssigkeit wird durch den Impuls der Hochgeschwindigkeits-Ventgaseinleitung angetrieben. Die Waschflüssigkeit wird hierbei in der Nähe der Ventgaseinleitung aus dem Waschbehälter entnommen und durch Rohre in den Wärmetauscher der Wärmetauscher-Sorbensfilter-Einheit und anschließend wieder zurück in den Pool des Waschbehälters gefördert. Gerade durch gezielte Entnahme eines stärker ventgashaltigen Flüssigkeitsgemisches (blasenhaltig) und Führung mit Steigung durch die Wärmetauschereinrichtung wird aufgrund der geringeren Dichte im Vergleich zur Dichte der (blasenfreien) Waschflüssigkeit im Pool des Waschbehälters, insbesondere bei geodätisch höherer Wiedereinleitung, der Antrieb noch verstärkt. Durch die Entnahme in der heißesten Wäscherzone mit Luft- und Dampfblasengehalt und durch die Kondensation von Dampfblasen während der Wärmeübertragung kann das Temperaturniveau noch erhöht und die Grädigkeit beim Wärmeaustausch weiter minimiert werden. Die Rückleitung in den Waschbehälter erfolgt bevorzugt oberhalb der Sedimentationszone.

Anzumerken ist noch, dass die weiter oben im Zusammenhang mit der ersten Hauptvariante des Verfahrens / der Vorrichtung gemachten Ausführungen hinsichtlich der Filtermaterialien sowie der Temperaturverhältnisse am Sorbensfilter, hinsichtlich der Druckverhältnisse und Strömungsgeschwindigkeiten in den Ventgas führenden Leitungen, hinsichtlich der Ausgestaltung des Waschbehälters und der darin angeordneten Einströmdüsen, sowie hinsichtlich der optional vorgesehenen Komponenten Gastrockner, Gebläse, Zusatzfilter etc. ohne weiteres auch für die zweite Hauptvariante zutreffen und daher an dieser Stelle nicht im einzelnen wiederholt werden müssen.

Die erste und die zweite Hauptvariante des Verfahrens und der zugehörigen Druckentlastungsvorrichtung können auch miteinander kombiniert werden, und zwar insbesondere in dem Sinne, dass eine Beheizung der Filterkammer mit dem Sorbensfilter und/oder des entspannten Entlastungsstroms im Überhitzungsabschnitt sowohl direkt durch den Entlastungsstrom im Hochdruckabschnitt ("trocken") als auch indirekt durch die Waschflüssigkeit ("flüssig/nass") möglich ist. Beispielsweise kann die Konstruktion so sein, dass eine Beheizung zumindest in bestimmten Betriebssituationen simultan auf beide Weisen (d.h. sowohl "trocken" als auch "flüssig") erfolgt, in anderen Betriebssituationen jedoch, etwa abhängig vom Füllstand der Waschflüssigkeit im Waschbehälter, nur auf eine der beiden Weisen. In einer Weiterentwicklung des Konzepts sind Mittel vorgesehen, um aktiv und zielgerichtet von dem einen auf den anderen Modus umzuschalten.

Gerade bei der oben genannten Kombination verschiedener Beheizungskonzepte, aber auch in anderen Fällen können der Waschbehälter und die Wärmetauscher-Sorbensfilter-Einheit, ggf. auch nur Teile derselben, etwa der Wärmetauscher, baulich in einer gemeinsamen Komponente vereinigt bzw. integriert sein. Ein Beispiel wird hierzu in der detaillierten Figurenbeschreibung erläutert.

In Bezug auf die Vorrichtung wird die eingangs genannte Aufgabe gelöst durch ein Druckentlastungssystem mit den Merkmalen des Anspruchs 20.

Es ist demnach erfindungsgemäß vorgesehen, dass die Entlastungsleitung zwischen der Drosseleinrichtung und dem Filterkammereinlass einen Überhitzungsabschnitt aufweist, der über Wärmetauscherflächen thermisch an den Hochdruckabschnitt angekoppelt ist, wobei diese Wärmetauscherflächen derart dimensioniert sind, dass der bei Auslegungs-Störfallbedingungen sich einstellende Entlastungsstrom im Überhitzungsabschnitt auf eine Temperatur erhitzt wird, die mindestens 10 °C, vorzugsweise 20 °C bis 50 °C, über der dort vorliegenden Taupunkttemperatur liegt.

Weitere vorteilhafte Ausgestaltungen der Vorrichtung wurden bereits weiter oben beschrieben oder gehen sinngemäß aus der Beschreibung der entsprechenden Verfahrensschritte hervor.

Die durch die Erfindung erzielten Vorteile bestehen insbesondere darin, dass durch eine gezielte Überhitzung des Entlastungsstroms vor dessen Eintritt in den Jodsorbensfilter im Sorbens sowohl im Makro- als auch im Mikroporenbereich eine relevante Belegung der Reaktionsflächen mit Wasserdampf und eine Blockierung durch Kapillarkondensation sicher verhindert werden. Durch die passiv-regenerative Ausgestaltung des Überhitzungsvorganges mit Wärmerückgewinnung aus dem Hochdruckbereich ist das Verfahren auch bei vollständigem Energieausfall ("station blackout") im zu entlastenden Kernkraftwerk einsetzbar. Weiterhin erfolgt durch die entscheidend hohe Gasüberhitzung von > 10 °C, vorzugsweise > 20 °C, z. B. im Temperaturniveau von > 120 °C bis 170 °C und mehr (bei hohen Durchsatzraten und hoher Gasüberhitzung in der Anfangsphase des Entlastungsvorganges), eine signifikante Erhöhung der Reaktionsgeschwindigkeiten im Jodsorptionsfilter. Durch die nun praktisch uneingeschränkt zur Verfügung stehenden, sehr hohen inneren Reaktionsoberflächen und durch die verbesserte Diffusion gelingt es, eine passive, hocheffektive Jodsorptionsfilterung, auch für Organojod-Verbindungen, mit Rückhalteraten von > 97 %, vorzugsweise > 99 %, zu erreichen. Eine Resuspension (Rückfreisetzung) des Jodes aus dem Jodsorbensfilter kann durch die chemische Bindung des Jodes und durch die permanente Beheizung des Jodsorbensfilters weitgehend vermieden werden.

Durch die hochwirksame Nassfilterung des Entlastungsstroms im Hochdruckbereich, ggf. in Verbindung mit weiteren Filtereinrichtungen, insbesondere einem metallischen Vorfilter und/oder einem Trockenfilter auf Sand- oder Kiesbettbasis, wird es damit erstmals ermöglicht, die bei Havariezuständen im Containment entstehenden aktiven Gase oder Dämpfe - zur ultimativen Druckbegrenzung im Containment - mit einer Organojod-Retention von > 99 % bis hin zu 99,9 % gefiltert an die Umgebung abzugeben. Dabei werden auch sonstige luftgetragene Aktivitäten und Aerosole sicher im Filtersystem zurückgehalten, selbst bei einem Ventbetrieb über mehrere Tage hinweg.

Mehrere Ausführungsbeispiele der Erfindung werden nachfolgend anhand von Zeichnungen näher erläutert. Darin zeigen in jeweils stark vereinfachter und schematisierter Darstellung:
- FIG. 1: ein Prinzipschaltbild von wesentlichen Komponenten eines erfindungsgemäßen Druckentlastungssystems für ein Kernkraftwerk,
- FIG. 2: eine kombinierte Regenerativ-Wärmetauscher- und Sorbensfiltereinheit des Druckentlastungssystems gemäß FIG. 1 in einem Längsschnitt,
- FIG. 3: eine perspektivische Ansicht von mehreren nebeneinander aufgestellten Regenerativ-Wärmetauscher- und Sorbensfiltereinheiten gemäß FIG. 2,
- FIG. 4: eine alternative Variante des Druckentlastungssystems gemäß FIG. 1, und
- FIG. 5: eine alternative Variante der kombinierten Regenerativ-Wärmetauscher- und Sorbensfiltereinheit gemäß FIG. 2 mit integriertem Waschbehälter.

Gleiche oder gleichwirkende Teile sind in allen Figuren mit denselben Bezugszeichen versehen.

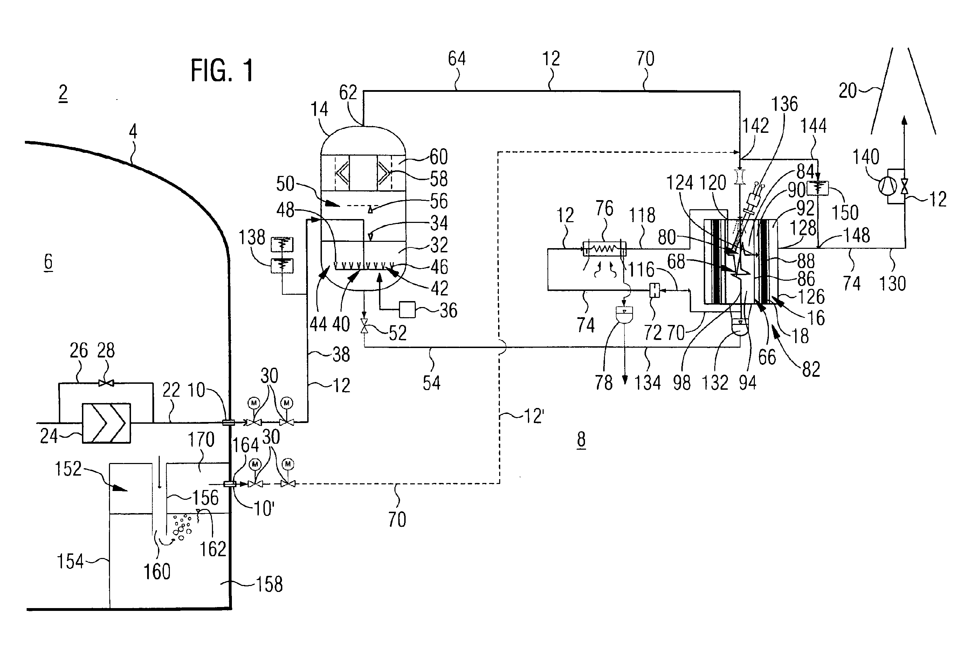

Das in FIG. 1 ausschnittsweise dargestellte Kernkraftwerk 2 weist eine auch als Containment bezeichnete äußere Sicherheitshülle 4 mit einem massiven Stahlbetonmantel auf. Die Sicherheitshülle 4 umschließt einen Innenraum 6. Im Innenraum 6 sind die wesentlichen nuklearen Komponenten des Kernkraftwerks 2 wie etwa der Reaktordruckbehälter mit dem Reaktorkern sowie weitere nukleare und nichtnukleare Anlagenkomponenten angeordnet (nicht dargestellt). Der Stahlbetonmantel der Sicherheitshülle 4 ist an seiner Innenseite mit einem Stahlmantel ausgekleidet. Die Sicherheitshülle 4 bildet einen hermetischen Verschluss des Innenraumes 6 gegenüber der Außenwelt und bewirkt bei einem unwahrscheinlichen Störfall mit Freisetzung von radioaktiv belasteten Gasen oder Dämpfen in den Innenraum 6 deren Rückhaltung und Einschluss.

Die Sicherheitshülle 4 ist dazu ausgelegt, auch vergleichsweise hohen Innendrücken von z. B. 3 bis 8 bar im Innenraum 6, wie sie etwa bei Havariezuständen mit massiver Dampffreisetzung auftreten könnten, standzuhalten und zugleich über einen längeren Zeitraum hinweg dicht zu bleiben. Gleichwohl ist zur weiteren Erhöhung der Reaktorsicherheit, und auch um den Innenraum 6 nach einem Störfall wieder begehbar zu machen, ein Druckentlastungssystem 8 vorgesehen, mit dessen Hilfe die im Innenraum 6 enthaltenen Gase und Dämpfe gefiltert, gereinigt und weitestgehend aktivitätsfrei in die Umgebung ausgeblasen werden können, so dass ein kontrollierter Druckabbau im Innenraum 6 ermöglicht ist. Der entsprechende Vorgang wird auch als Venting bezeichnet.

Das Druckentlastungssystem 8 ist vorliegend für eine besonders effektive und energetisch günstige Rückhaltung von im Ventgas enthaltenen Aktivitätsträgern, insbesondere von elementarem Jod und jodhaltigen organischen Verbindungen niedriger Kohlenstoffzahl (so genanntes Organojod), ausgelegt. Zu diesem Zweck umfasst das Druckentlastungssystem 8 eine an einen Auslass 10 bzw. an eine Durchführung der Sicherheitshülle 4 angeschlossene Entlastungsleitung 12, in die hintereinander unter anderem ein Waschbehälter 14 und weiter stromabwärts ein in einer Filterkammer 16 angeordneter Sorbensfilter 18, nämlich ein Jodsorbens-filter, geschaltet sind. Weiter stromabwärts wird der gefilterte Entlastungsstrom über einen Kamin 20 oder Schornstein, allgemein eine Ausblasöffnung, in die umliegende Atmosphäre ausgeblasen. Die Strömungsrichtung des Entlastungsstroms ist jeweils durch Pfeile angedeutet.

Wie in FIG. 1 ersichtlich ist, kann die Entlastungsleitung 12 auch einen innerhalb der Sicherheitshülle 4 liegenden inneren Leitungsabschnitt 22 umfassen, in die optional ein Vorfilter 24, insbesondere ein Metallvorfilter, zur Zurückhaltung der Grobaerosole geschaltet ist. Für eine bedarfsweise Umgehung des Vorfilters 24 ist eine parallel zu ihm geschaltete Bypassleitung 26 vorgesehen, die sich mit einem Regelventil 28 bedarfsgerecht öffnen oder schließen lässt.

Ein oder mehrere in die Entlastungsleitung 12 geschaltete, im Normalbetrieb des Kernkraftwerks 2 verschlossene Absperrventile 30 können wie in FIG. 1 ersichtlich außerhalb der Sicherheitshülle 4, alternativ oder zusätzlich auch innerhalb der Sicherheitshülle 4 angeordnet sein. Um bei einem Störfall mit Druckerhöhung im Innenraum 6 den Druckentlastungsvorgang einzuleiten, wird das jeweilige Absperrventil 30 geöffnet, was vorzugsweise automatisch und ohne Einsatz von Fremdenergie, etwa durch eine druckabhängige Auslösevorrichtung erfolgt.

Zur Einstellung von im Hinblick auf das Filterungsziel möglichst optimalen Betriebsbedingungen am Sorbensfilter 18 ist eine Reihe von technischen Maßnahmen vorgesehen:
Zum einen wird der unter vergleichsweise hohem Druck stehende, vom Innenraum 6 der Sicherheitshülle 4 kommende Entlastungsstrom (Ventgasstrom) im Waschbehälter 14 durch eine Waschflüssigkeit 32 geleitet und dadurch gereinigt, insbesondere von Grobaerosolen befreit.

Zu diesem Zweck wird die Waschflüssigkeit 32 im Bereitschaftszustand des Druckentlastungssystems 8 im Waschbehälter 14 mit einer Mindestfüllstandshöhe 34 vorgehalten. Zur chemischen Konditionierung der Waschflüssigkeit 32, insbesondere zur Verbesserung der Filter- und Rückhalteeigenschaften, kann über eine hier nur schematisch angedeutete Dosiereinrichtung 36 eine Zuspeisung geeigneter Reagenzien, z. B. Natriumthiosulfatlösung, in die Waschflüssigkeit 32 erfolgen.

Im Ventbetrieb, sprich im Druckentlastungsfall, wird der Entlastungstrom über den Leitungsabschnitt 38 der Entlastungsleitung 12 in den Waschbehälter 14 geleitet und tritt dort über ein Verteilerstück 40 und nachfolgend eine Mehrzahl von strömungsmäßig parallel geschalteten Einströmdüsen 42 aus. Die Einströmdüsen 42 befinden sich unterhalb der Mindestfüllstandshöhe 34 im sogenannten Waschflüssigkeitspool 44, kurz Pool, des Waschbehälters 14 und sind hier als Venturi-düsen ausgestaltet. Dazu weist die jeweilige Einströmdüse 42 ein sich bereichsweise verengendes Venturirohr 46 auf, wobei an der auch als Kehle bezeichneten Verengungsstelle eine Ringschlitz-Einspeisung (nicht dargestellt) für die umliegende Waschflüssigkeit 32 vorgesehen ist. Der im Ventbetrieb durch die das Venturirohr 46 strömende Entlastungsstrom reißt somit an der Kehle eintretende Waschflüssigkeit 32 mit. Aus den nach oben gerichteten Austrittöffnungen 48 der Einströmdüsen 42 wird daher ein innig miteinander verquirltes Waschflüssigkeit-Ventgas-Gemisch ausgeworfen, wobei sich die im Ventgasstrom enthaltenen Verunreinigungen und Aerosole zum großen Teil in der Waschflüssigkeit 32 einlagern.

In der oberhalb des Waschflüssigkeitspools 44 befindlichen Auswurfzone 50 trennen sich die flüssigen und die gasförmigen Anteile des Waschflüssigkeit-Ventgas-Gemischs schwerkraftbedingt wieder. Die gegebenenfalls um Kondensat aus dem Ventgasstrom vermehrte und mit Aerosolen und Verunreinigungen (Partikel, lösliche Gase) angereicherte Waschflüssigkeit 32 sinkt nach unten in den Waschflüssigkeitspool 44 zurück. Überschüssige Waschflüssigkeit 32 bzw. Kondensat wird bedarfsweise über eine an den Boden des Waschbehälters 14 angeschlossene, mit einem Absperrventil 52 versehene Flüssigkeitsableitung 54 abgeführt, so dass der Flüssigkeitspegel im Waschbehälter 14 eine vorgegebene Höchst-füllstandshöhe 56 nicht überschreitet. Das durch den Waschvorgang gereinigte und weiterhin unter hohem Druck stehende Ventgas tritt - nachdem es oberhalb der Auswurfzone 50 und oberhalb der Höchstfüllstandshöhe 56 angeordnete Feuchtigkeitsabscheider 58 und ggf. weitere Filterelemente 60 durchquert hat - nach oben über die Austrittsöffnung 62 aus dem Waschbehälter 14 aus und in den nachfolgenden Leitungsabschnitt 64 der Entlastungsleitung 12 ein.

Zum anderen wird die Filterkammer 16 mit dem Sorbensfilter 18 im Entlastungsbetrieb über zugehörige Wärmetauscherflächen 66, 68 durch den vom Leitungsabschnitt 64 kommenden, zuvor im Waschbehälter 14 gereinigten Entlastungsstrom, der sich noch ungefähr (jedenfalls von der Größenordnung her) auf dem Druckniveau im Innenraum 6 der Sicherheitshülle 4 befindet und vergleichsweise heiß ist, selber vorgewärmt. Erst nach dieser Wärmeabgabe und -übertragung im Hochdruckabschnitt 70 der Entlastungsleitung 12 wird der Entlastungsstrom in einem weiter stromabwärts liegenden Drosselventil, kurz Drossel 72, auf annähernd (jedenfalls von der Größenordnung her) Umgebungsdruck entspannt und dabei getrocknet. Der Teil der Entlastungsleitung 12 stromaufwärts der Drossel 72 bildet den Hochdruckabschnitt 70, der Teil stromabwärts den Niederdruckabschnitt 74.

Im Anschluss an die Expansionstrocknung durch die Drossel 72 wird der Entlastungsstrom durch einen (optionalen) zusätzlichen Gastrockner 76 mit zugehörigem Kondensatabscheider und Kondensatsammelbehälter 78 geleitet. Weiter stromabwärts wird der Entlastungstrom im Niederdruckabschnitt 74 der Entlastungsleitung 12 derart an dem Hochdruckabschnitt 70 vorbeigeführt, dass an entsprechenden Wärmetauscherflächen 68 eines Überhitzungsabschnitts 80 eine Wärmeübertragung vom Gasstrom im Hochdruckabschnitt 70 zum Gasstrom im Niederdruckabschnitt 74 erfolgt. Erst nach der dadurch bewirkten Überhitzung wird der entspannte Entlastungsstrom durch die Filterkammer 16 mit dem Sorbensfilter 18 geleitet.

Die im noch nicht entspannten Entlastungstrom im Hochdruckabschnitt 70 enthaltene Wärmeenergie wird also in zweifacher Weise genutzt: Zum einen erfolgt über die Wärmetauscherflächen 66, 68 eine Beheizung der Filterkammer 16 mit dem darin angeordneten Sorbensfilter 18. Zum anderen erfolgt über die Wärmetauscherflächen 68 eine Überhitzung des entspannten Entlastungsstroms unmittelbar vor dem Eintritt in die Filterkammer 16. Dabei ist durch geeignete Dimensionierung und Auslegung der strömungsführenden und wärmeleitenden Komponenten und ggf. durch geeignete Einstellung des Drosselquerschnitts der Drossel 72 sowie weiterer Betriebsparameter sichergestellt, dass der Entlastungstrom im Überhitzungsabschnitt 80, also unmittelbar vor dem Eintritt in die Filterkammer 16, auf eine Temperatur erhitzt wird, die mindestens 10 °C über der dort vorliegenden Taupunkttemperatur liegt, im Volllastbetrieb des Druckentlastungssystems 8 sogar mindestens 20 °C. Durch die Kombination dieser beiden Maßnahmen wird eine Kondensation des Entlastungsstroms in der Filterkammer 16, die zu einer Effizienzbeeinträchtigung oder gar dauerhaften Zerstörung des Sorbensfilters 18 führen könnte, sicher vermieden.

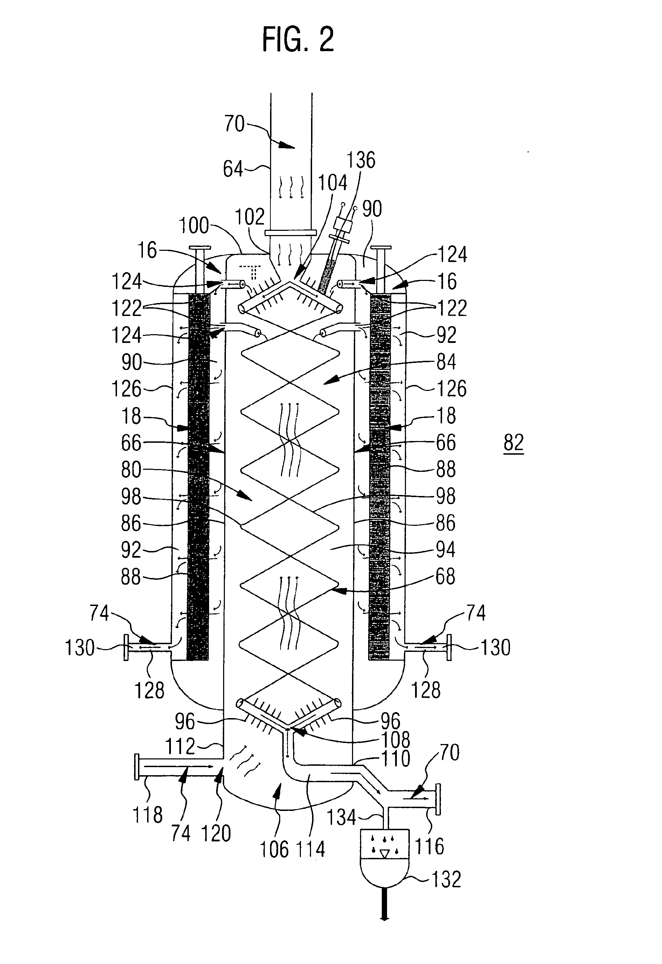

FIG. 2 zeigt etwas detaillierter eine konkrete Ausgestaltung der die Wärmetauscherflächen 66 und 68 enthaltenden Wärmetauscher-Sorbensfilter-Einheit 82. Die Filterkammer 16 ist als Ringkammer ausgeführt, die eine beispielsweise zylindrische oder quaderförmige Zentralkammer 84 ringförmig und insbesondere koaxial umgibt. Die Längsachse der Wärmetauscher-Sorbensfilter-Einheit 82 ist vertikal ausgerichtet. Filterkammer 16 und Zentralkammer 84 sind durch eine gut wärmeleitende Trennwand 86 - zumindest in einem unteren Bereich - gasdicht voneinander getrennt. Die Filterkammer 16 ist ihrerseits durch ringförmig in ihr angeordnete Filterelemente 88 in einen innen liegenden, nach innen durch die Trennwand 86 begrenzten Zuströmraum 90 und einen außen liegenden Abströmraum 92 unterteilt. Alternativ zu der Ringkammer-Bauweise kann auch eine schlichte Kastenbauweise vorgesehen sein, wobei sich beispielsweise an eine quaderförmige Zentralkammer 84 zu einer Seite hin eine durch eine gerade Trennwand 86 getrennte quaderförmige Filterkammer 16 anschließt. Natürlich können einer Zentralkammer 84 auch mehrere voneinander getrennte Filterkammern 16 zugeordnet sein, die in Bezug auf den entspannten Entlastungsstrom im Niederdruckabschnitt 74 dann strömungsmäßig parallel geschaltet sind.

Der in Strömungsrichtung des Entlastungsstroms gesehen von dem Waschbehälter 14 wegführende Leitungsabschnitt 64 der Entlastungsleitung 12 ist mit einem im Innenraum 94 der Zentralkammer 84 angeordneten System von strömungsmäßig parallel geschalteten, an Ihrer Außenseite und ggf. auch an ihrer Innenseite mit Rippen 96 versehenen Wärmetauscherrohren 98 verbunden (in den Endbereichen sind die Wärmetauscherrohre 98 halbperspektivisch gezeichnet, dazwischen nur als einfache Linien dargestellt). Dazu ist die Entlastungsleitung 12 am Ende des Leitungsabschnitts 64 durch eine im Deckengehäuse 100 der Zentralkammer 84 angeordnete, an ihrer Außenseite gasdicht verschlossene Gehäusedurchbrechung 102 in die Zentralkammer 84 hineingeführt und ggf. über ein Verzweigungstück 104 mit den Wärmetauscherrohren 98 verbunden. Alternativ können auch Plattenwärmetauscher oder andere Wärmetauscherelemente vorgesehen sein. Die Wärmetauscherrohre 98 sind im Innenraum 94 der Zentralkammer 84 in mäanderförmiger Weise von oben nach unten bis in den Bodenbereich 106 geführt, wo sie sich in einem Sammler 108 wieder vereinigen. An den Sammler 108 ist abströmseitig eine durch eine weitere Gehäusedurchbrechung 110 des Zentralkammergehäuses 112 hindurch geführte Rohrleitung 114 angeschlossen, die in den zur Drossel 72 führenden Leitungsabschnitt 116 der Entlastungsleitung 12 mündet.

Der von der Drossel 72 wegführende Leitungsabschnitt 118 der Entlastungs-leitung 12 führt nach dem optional vorgesehenen Gastrockner 76 in die Zentralkammer 84 zurück. Die Zentralkammer 84 weist daher im Bodenbereich 106 einen Zentralkammereinlass 120 auf, an den der von der Drossel 72 bzw. vom Gastrockner 76 kommende Leitungsabschnitt 118 angeschlossen ist (siehe auch FIG. 1). Am oberen Ende der Zentralkammer 84, in der Nähe des Deckengehäuses 100, ist eine Mehrzahl von die Trennwand 86 durchdringenden Durchtritts-öffnungen 122 vorgesehen, die von dem Innenraum 94 der Zentralkammer 84 in den Zuströmraum 90 der Filterkammer 16 führen und somit zusammen den Filterkammereinlass 124 bilden. Über den stromabwärts der Filterelemente 88 an der Außenseite des Filterkammergehäuses 126, z. B. in dessen Bodenbereich oder auch an anderer Stelle, angeordneten Filterkammerauslass 128 ist der Abströmraum 92 der Filterkammer 16 mit dem zum Kamin 20 führenden Leitungsabschnitt 130 der Entlastungsleitung 12 verbunden (in FIG. 2 sind zwei strömungsmäßig parallel geschaltete Auslassöffnungen mit zugegehörigen Leitungsanschlüssen vorgesehen, die weiter stromabwärts in nicht dargestellter Weise wieder zusammengeführt werden können).

Auf diese Weise wird der im Leitungsabschnitt 64 vom Waschbehälter 14 kommende, unter hohem Druck stehende und vergleichsweise heiße Entlastungsstrom über die Gehäusedurchbrechung 102 in die Zentralkammer 84 hinein geführt und durchströmt die darin angeordneten Wärmetauscherohre 98 mit im Wesentlichen vertikal von oben nach unten weisender Hauptströmungsrichtung. Anschließend wird das Ventgas über den Leitungsabschnitt 116 zu der Drossel 72 geführt, durch Expansion getrocknet und danach durch den Gastrockner 76 geleitet. Über den Leitungsabschnitt 118 tritt der entspannte Gasstrom wieder in die Zentralkammer 84 ein. Er wird im Gegenstrom oder Kreuzgegenstrom zum Hochdruck-Entlastungstrom in den Wärmetauscherrohren 98 im Wesentlichen von unten nach oben an den Wärmetauscherrohren 98 vorbei geführt, um schließlich über die Durchtrittsöffnungen 122 des Filterkammereinlasses 124 in die Filterkammer 16 einzutreten, wo die gewünschte Organojodfilterung und Rückhaltung erfolgt.

Beim Durchströmen der Wärmetauscherrohre 98 erfolgt ein Wärmeübertrag von dem heißen Hochdruck-Entlastungsstrom in den Wärmetauscherrohren 98 auf den umliegend im Gegenstrom an den Wärmetauscherohren 98 vorbei geführten, durch die Drossel 72 entspannten und getrockneten Niederdruck-Entlastungstrom. Die Rohrwände der Wärmetauscherrohre 98 bilden damit die Wärmetauscherflächen 68 des durch den Innenraum 94 der Zentralkammer 84 gebildeten Überhitzungsabschnitts 80, in dem die oben bereits beschriebene Überhitzung des entspannten Entlastungsstroms erfolgt, bevor dieser im überhitzten Zustand über den durch die Durchtrittsöffnungen 122 gebildeten Filterkammereinlass 124 in den Zuströmraum 90 der Filterkammer 16 eintritt, anschließend die Filterelemente 88 durchströmt und schließlich über den Abströmraum 92, den Filterkammerauslass 128 und den Leitungsabschnitt 130 gefiltert zu dem Kamin 20 gelangt. Zugleich erfolgt - üblicherweise in geringerem Umfang - über die als Wärmetauscherflächen 66 wirksamen, gut wärmeleitenden Trennwände 86 ein Wärmeübergang von dem derart aufgeheizten Niederdruck-Entlastungsstrom auf die Filterkammer 16, die dadurch ebenfalls entsprechend beheizt wird.

Für eine Verbesserung des Wärmeübergangs können die Wärmetauscherrohre 98 auch in ihrem Inneren geeignet strukturiert sein, z. B. mit Rippen versehen sein oder andere Turbulenz oder eine Drallströmung erzeugende Inneneinbauten aufweisen.

Das Druckentlastungssystem 8 gemäß FIG. 1 ist weiterhin dazu ausgelegt, dass ein Teilstrom des Entlastungsstroms im Hochdruckabschnitt 70 bedarfsweise an der Wärmetauscher-Sorbensfilter-Einheit 82 vorbeigeführt werden kann, also nicht die Wärmetauscherrohre 98, die Drossel 72, die Zentralkammer 84 und die Filterkammer 16 durchströmt. Dieser Bypass-Teilstrom trägt somit nicht zur Überhitzung des Niederdruck-Entlastungsstroms im Überhitzungsabschnitt 80 und zur Beheizung der Filterkammer 16 bei. Zu diesem Zweck ist an der Verzweigungsstelle 142 stromabwärts des Waschbehälters 14 und stromaufwärts der Wärmetauscherrohre 98 eine Bypassleitung 144 an den Leitungsabschnitt 64 der Entlastungsleitung 12 angeschlossen, die an der Einmündungsstelle 148 stromabwärts des Filterkammerauslasses 128 wieder in die Entlastungsleitung 12, nämlich in den Leitungsabschnitt 130, einmündet. Zur Einstellung des Teilstrom-Verhältnisses können geeignete Stell- und Regeleinrichtungen (nicht dargestellt) vorgesehen sein. Des Weiteren ist zur Anpassung des Druckniveaus ein Druckminderungsventil 150 in die Bypassleitung 144 geschaltet.

Sich beim Durchströmen der Wärmetauscherrohre 98 bildendes Kondensat 132 kann bedarfsweise durch eine von der Rohrleitung 114 des Leitungsabschnitts 116 abzweigende Kondensatableitung 134 entnommen und beispielsweise zu einem Kondensatlagerbehälter geführt werden. Die Kondensatableitung 134 kann wie in FIG. 1 dargestellt mit der Flüssigkeitsableitung 54 aus dem Waschbehälter 14 zusammengeführt sein.

Die Filterelemente 88 des Sorbensfilters 18 sind bevorzugt aus Jod und Organojod sorbierenden Materialien gefertigt, z. B. aus bindemittelfreien Zeolithen mit offener Struktur, das heißt einem offenen Porensystem, und mit im Feuchtbetrieb nicht löslicher Silberdotierung. Falls ein Feuchteanfall im Sorbensfilter 18 in allen Betriebszuständen des Druckentlastungssystems 8 sicher ausgeschlossen werden kann, etwa durch entsprechende Auslegung der Überhitzungsleistung im Überhitzungsabschnitt 80, können alternativ auch Zeolithe mit einer Silbernitrat-Dotierung bzw. -belegung als Filtermaterialien vorgesehen oder jedenfalls beigemischt sein, deren Rückhaltewirkung für Organojod sich bei hinreichend hohem Taupunktabstand des Entlastungsstroms überraschenderweise als besonders hoch herausgestellt hat.

Für eine sichere Beherrschung von besonderen Betriebszuständen, etwa beim Anfahrbetrieb, ist optional eine mit einer externen Energiequelle (z. B. elektrisch) betriebene Zusatzheizeinrichtung 136 thermisch an die Entlastungsleitung 12 angekoppelt. Sie ist hier in FIG. 2 beispielsweise in/an der Zentralkammer 84 der Wärmetauscher-Sorbensfilter-Einheit 82 angeordnet, alternativ oder zusätzlich in der Filterkammer 16, insbesondere in deren Zuströmraum 90. Selbstverständlich sind auch andere Anbringungsorte denkbar.

Weiterhin können beispielsweise im Leitungsabschnitt 38 zwischen dem Auslass 10 aus der Sicherheitshülle 4 und dem Waschbehälter 14 Vorrichtungen zur Vakuumbegrenzung 138 vorgesehen sein. Hierdurch wird eine Vakuumbildung in der Sicherheitshülle 4, z. B. nach erfolgtem Venting und anschließender partieller Kondensation des vorhandenen Dampfes (z. B. durch Zuschaltung eines Spray- oder sonstigen Kühlsystems) durch bedarfsgerechte Lufteinsaugung in die Sicherheitshülle 4 vermieden bzw. quantitativ begrenzt.

Für eine aktive Absaugung des in der Sicherheitshülle 4 befindlichen Gas-Dampf-Gemisches kann optional ein Sauggebläse 140, z. B. stromaufwärts des Waschbehälters 14, vorzugsweise aber stromabwärts des Sorbensfilters 18 in die Entlastungsleitung 12 geschaltet bzw. bedarfsweise zuschaltbar sein, welches durch eine externe Energiequelle mit Antriebsenergie versorgt wird. Das Sauggebläse 140 ist vorteilhafterweise so ausgelegt, dass in Kombination mit einer geringen Wasserüberdeckung der Einströmdüsen 42 und vergleichsweise geringen Düsengeschwindigkeiten (< 50 m/s) hier nur eine Grobaerosolvorreinigung erfolgt, aber anschließend optimale Geschwindigkeiten in den nachfolgenden Filtereinrichtungen bei weniger als 1/4 des maximalen Durchsatzes eingestellt werden können. Damit ist es möglich, den Innenraum 6 der Sicherheitshülle gegenüber der Umgebungsatmosphäre auf (geringen) Unterdruck zu bringen und zu halten und somit und Außenleckagen völlig zu vermeiden.

Bei einer ebenfalls in FIG. 1 dargestellten alternativen Ausführungsvariante wird im Falle eines Siedewasserreaktors auf den (außerhalb der Sicherheitshülle 4 aufgestellten) Waschbehälter 14 verzichtet. Stattdessen erfolgt eine Nassfilterung des aus der Sicherheitshülle 4 austretenden Entlastungsstroms noch innerhalb der Sicherheitshülle 4 in einer dort befindlichen Kondensationskammer 152. Die Kondensationskammer 152 ist vom restlichen Innenraum 6 in der Sicherheitshülle 4 durch eine gasdichte und druckstabile Trennwand 154 abgetrennt. Eine strömungsmäßige Verbindung zwischen beiden Raumbereichen ist nur durch eine oder mehrere Überströmrohre 156 verwirklicht, die in die in der Kondensationskammer 152 vorhandene Kondensatflüssigkeit 158 eintauchen. Das heißt, die Ausströmöffnung 160 des jeweiligen Überströmrohres 156 befindet sich unterhalb der Mindestfüllstandshöhe 162 von Kondensatflüssigkeit 158. Die (hier gestrichelt gezeichnete) Entlastungsleitung 12' ist in diesem Fall an einen Kondensationskammerauslass 164 angeschlossen, der oberhalb der Höchstfüllstandshöhe in dem oberhalb der Kondensatflüssigkeit 158 liegenden Gassammelraum 170 angeordnet ist. Im hier gezeigten Beispiel fällt der Kondensationskammerauslass 164 zusammen mit dem Auslass 10' aus der Sicherheitshülle 4. Die Entlastungsleitung 12' ist vom Auslass 10' ohne Zwischenschaltung eines Wäschers direkt zu der Wärmetauscher-Sorbensfilter-Einheit 82 geführt.

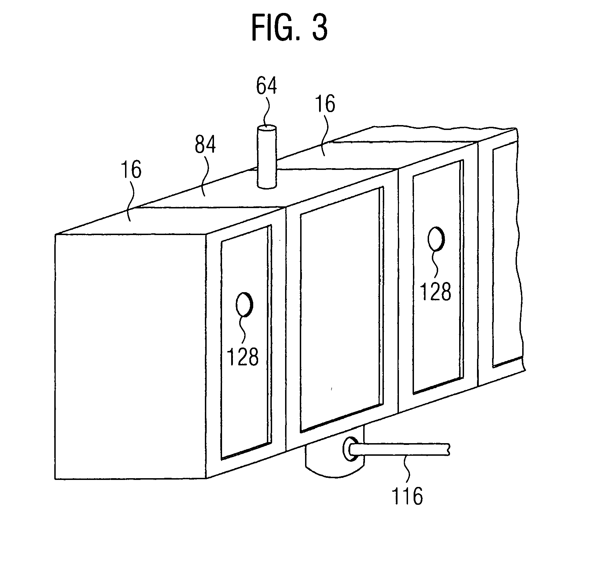

Schließlich ist zu erwähnen, dass das Druckentlastungssystem 8 mehrere strömungsmäßig parallel geschaltete Stränge gleicher oder ähnlicher Bauart aufweisen kann. Es ist auch möglich, dass nur einzelne Abschnitte der Entlastungsleitung 12 durch Parallelschaltung gleichartiger Komponenten dupliziert sind. Dabei kann es sinnvoll sein, mehrere der in FIG. 2 dargestellten Wärmetauscher-Sorbensfilter-Einheiten 82 in der Art eines modularen Systems direkt aneinander angrenzend und thermisch miteinander gekoppelt aufzustellen, und zwar vorzugsweise mit alternierender Anordnung von beispielsweise kastenförmigen Zentralkammern 84 und entsprechenden Filterkammern 16. Dies ist in FIG. 3 veranschaulicht.

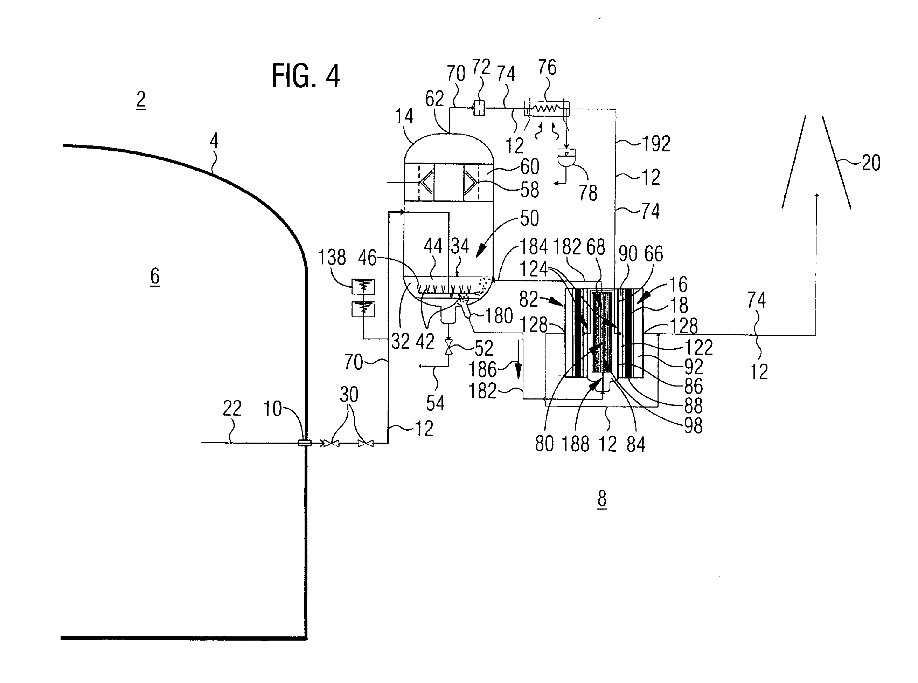

Auch bei der in FIG. 4 dargestellten Variante des Druckentlastungssystems 8 wird der aus der Sicherheitshülle 4 kommende Entlastungsstrom zunächst in einem Waschbehälter 14 gereinigt, weiter stromabwärts an einer Drossel 72 entspannt, ggf. in einem Gastrockner 76 getrocknet, danach durch einen Überhitzungsabschnitt 80 geführt, in dem eine regenerative Beheizung erfolgt, und schließlich durch eine Filterkammer 16 mit einem Sorbensfilter 18 geleitet, bevor er über den Kamin 20 in die Umgebung ausgeblasen wird. Wie bei den zuvor beschriebenen Varianten wird durch die Überhitzung des Entlastungsstroms unmittelbar vor dem Filterkammereintritt ein vergleichsweise hoher Taupunktabstand von mindestens 10 °C, vorzugsweise mindestens 20 °C im Volllastbetrieb, sichergestellt, um ein Auskondensieren im Bereich des Sorbensfilters 18 zu verhindern und eine besonders effektive Rückhaltung von jodhaltigen Aktivitätsträgern zu erzielen.

Im Unterschied zu den zuvor beschriebenen Varianten wird bei dem System gemäß FIG. 4 die zur Überhitzung des Niederdruck-Entlastungsstroms und zur Beheizung der Filterkammer 16 benötigte Wärmeenergie nicht direkt von dem Hochdruck-Entlastungstrom übertragen. Vielmehr wird hier die im Waschbehälter 14 vorgehaltene, ihrerseits durch den einströmenden Hochdruck-Entlastungsstrom erhitzte Waschflüssigkeit 32 als Wärmetransport- und Heizmedium verwendet.

Zu diesem Zweck ist im unteren Bereich des Waschflüssigkeitspools 44, also beispielsweise deutlich unterhalb der Mindestfüllstandshöhe 34, das Einlassende 180 einer Zirkulationsleitung 182 an den Waschbehälter 14 angeschlossen. Das Auslassende 184 der Zirkulationsleitung 182 ist geodätisch höher liegend als das Einlassende 180 an den Waschbehälter 14 angeschlossen, etwa wie hier dargestellt knapp unterhalb der Mindestfüllstandshöhe 34 oder auch etwas höher in der Auswurfzone 50. Die Zirkulationsleitung 182 wird im Ventbetrieb - angetrieben durch den Strömungsimpuls des durch die Einströmdüsen 42 in den Waschbehälter 14 einströmenden Ventgasstroms - in Strömungsrichtung 186 von einem (blasenhaltigen) Waschflüssigkeit-Ventgas-Gemisch durchströmt. Die mit dem Ventgas vermischte Waschflüssigkeit 32 wird somit dem Waschbehälter 14 an einer vergleichsweise tief liegenden Stelle entnommen und - nach einem zwischengeschalteten Steigabschnitt 188 - an höherer Stelle nach Art eines Waschflüssigkeitskreislaufs wieder in ihn zurück zirkuliert. Für eine besonders gute Ausnutzung des Antriebsimpulses ist dabei mindestens eine der Einströmdüsen 42 auf das Einlassende 180 der Zirkulationsleitung 182 ausgerichtet, hier also (schräg) nach unten gerichtet. Die Zirkulation wird dabei gemäß dem Naturumlaufprinzip durch die Dichteunterschiede zwischen der (reinen) Waschflüssigkeit 32 und dem (blasenhaltigen) Waschflüssigkeit-Ventgas-Gemisch unterstützt.

In dem Steigabschnitt 188 der Zirkulationsleitung 182 wird die zirkulierende, mit Ventgas vermischte Waschflüssigkeit 32 von unten nach oben durch eine Anzahl von strömungsmäßig parallel geschalteten Wärmetauscherrohren 98 (oder auch anderen Wärmetauscherelementen) geleitet, die innerhalb der Zentralkammer 84 der Wärmetauscher-Sorbensfilter-Einheit 82 in annähernd vertikaler Ausrichtung angeordnet sind. Der im Leitungsabschnitt 192 der Entlastungsleitung 12 über die Drossel 72 und den Gastrockner 76 vom Waschbehälter 14 kommende, bei der Nassfilterung gereinigte Entlastungsstrom wird wiederum im Gegenstrom zu der der durch die Wärmetauscherrohre 98 zirkulierenden Waschflüssigkeit 32, d. h. von oben nach unten, außen an den Wärmetauscherrohren 98 vorbei durch die Zentralkammer 84 geleitet. Der Entlastungsstrom durchströmt die Zentralkammer 84, bevor er durch in einem unteren Bereich in der Trennwand 86 zwischen der Zentralkammer 84 und der Filterkammer 16 angeordnete, den Filterkammereinlass 124 bildende Durchtrittsöffnungen 122 in die Filterkammer 16 mit dem Sorbensfilter 18 übertritt (der Filterkammereinlass 124 wird in der Regel weiter unten in Bodennähe der Trennwand 86 liegen als hier in der rein schematischen FIG. 4 dargestellt).

Analog zu der im Zusammenhang mit FIG. 1 und FIG. 2 beschriebenen Variante bilden die Rohrwände der Wärmetauscherrohre 98 und die Trennwand 86 somit Wärmetauscherflächen 66 und 68 für einen Wärmeübertrag von der zirkulierenden Waschflüssigkeit 32 auf den Niederdruck-Entlastungsstrom einerseits und die Filterkammer 16 andererseits. Der vom Niederdruck-Entlastungsstrom durchströmte Abschnitt der Zentralkammer 84 bildet dabei den Überhitzungsabschnitt 80, der strömungsmäßig unmittelbar der Filterkammer 16 vorgeschaltet ist.

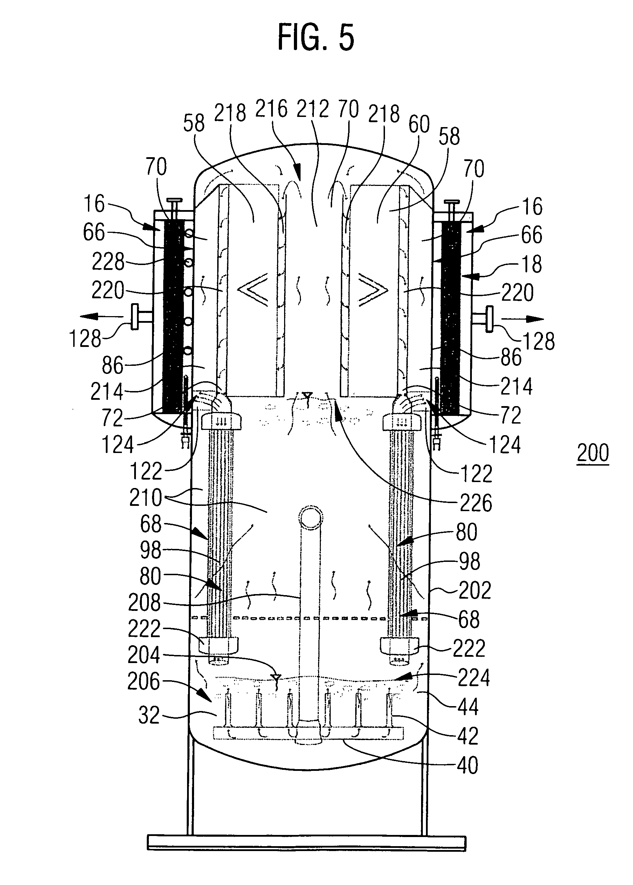

Schließlich ist in Fig. 5 eine weitere Variante des Druckentlastungssystems 8 ausschnittsweise dargestellt. Sie umfasst eine kombinierte Wäscher-Wärmetauscher-Sorbensfilter-Einheit 200. Konzeptionell kann man sich vorstellen, dass dazu der Waschbehälter 14 und die Wärmetauscher-Sorbensfilter-Einheit 82 des Druckentlastungssystems 8 gemäß FIG. 1 in einem gemeinsamen Gehäuse 202 angeordnet und integriert sind.

Konkret umfasst die in FIG. 5 im Längsschnitt dargestellte Wäscher-Wärmetauscher-Sorbensfilter-Einheit 200 einen im unteren Abschnitt des Gehäuses 202 angeordneten und mindestens bis zu einer Mindestfüllstandshöhe 204 mit Waschflüssigkeit 32 gefüllten Waschbereich 206. Über eine durch eine Gehäusedurchbrechung hindurch geführte Rohrleitung 208 und ein sich strömungsmäßig anschließendes Verteilerstück 40 wird ein aus der Sicherheitshülle eines Kernkraftwerks entnommener Entlastungsstrom einer Mehrzahl von strömungsmäßig parallel geschalteten Einströmdüsen 42 zugeleitet. Beim Austritt in den Waschflüssigkeitspool 44 wird der Ventgasstrom einer Nassfilterung unterzogen, ganz analog zu dem aus FIG. 1 bekannten Waschbehälter 14.

Nach erfolgter Separation des Waschflüssigkeit-Ventgas-Gemischs strömt der unter Hochdruck stehende, gereinigte und von Grobaerosolen befreite Ventgas-strom durch den Zentralraum 210 und sich weiter oben anschließende Strömungskanäle oder Korridore 212 und 214, die zum Teil an der außen liegenden ringförmigen Filterkammer 16 vorbei geführt sind und im thermischen Kontakt mit ihr stehen, zum Deckenbereich 216 des Gehäuses 202 nach oben, wird dort umgelenkt und tritt über Strömungskanäle 218 in Feuchtigkeitsabscheider 58 und Filterelemente 60 ein. Zur intensiveren Vorwärmung kann über eine zusätzliche Beheizungseinrichtung 228 ein Teilstrom des Hochdruck-Entlastungsstroms entnommen und unter Umgehung der strömungsmäßig nachgeschalteten Wärmetauscherrohre 98 (siehe unten) direkt durch den Sorbensfilter 18 oder den strömungsmäßig vorgeschalteten Bereich geführt werden. Auf der Abströmseite des jeweiligen Filterelements 60 wird der Entlastungstrom über einen Strömungskanal 220 in Abwärtsrichtung einer Drossel 72 zugeführt und dort entspannt. In dem sich anschließenden Niederdruckabschnitt strömt das entspannte Ventgas zunächst durch eine Mehrzahl von strömungsmäßig parallel geschalteten Wärmetauscherrohren 98 weiter nach unten, wird in den Umkehrabschnitten 222 durch geeignete Konturierung der strömungsführenden Elemente zur Richtungsumkehr gezwungen und strömt durch sich anschließende, strömungsmäßig seriell und geometrisch parallel zu den nach unten führenden Wärmetauscherrohren 98 liegende Wärmetauscherrohre 98 wieder nach oben zu den den Filterkammereinlass 124 bildenden Durchtrittsöffnungen 128 in die Filterkammer 16. Die Filterkammer ist analog zu der Filterkammer 16 bei der Vorrichtung gemäß FIG. 1 oder FIG. 2 aufgebaut. Über den Filterkammerauslass 128 tritt der im Sorbensfilter 18 gefilterte Entlastungsstrom in eine zu einem Kamin (hier nicht dargestellt) führende Rohrleitung aus.

Über die an der Filterkammer 16 vorbei geführten Strömungskanäle 214 für den Hochdruck-Entlastungsstrom erfolgt einer Beheizung der Filterkammer 16. Die wärmeleitenden Trennwände 86 zwischen den Strömungskanälen 214 und der Filterkammer 16 bilden dabei Wärmetauscherflächen 66. Des Weiteren bilden die Rohrwände der Wärmetauscherrohre 98 Wärmetauscherflächen 68 zwischen dem den Zentralraum 210 durchströmenden, vergleichsweise heißen Hochdruck-Entlastungsstrom und dem vor dem Eintritt in die Filterkammer 16 auf einen Taupunktabstand von mindestens 10 °C, vorzugsweise mehr als 20 °C, zu überhitzenden Niederdruck-Entlastungstrom in den Wärmetauscherrohren 98. Die Wärmetauscherrohre 98 stellen somit den Überhitzungsabschnitt 80 für den zuvor an der Drossel 72 entspannten Entlastungstrom dar.

Bei dem in FIG. 5 dargestellten Betriebszustand liegt der Flüssigkeitsspiegel 224 der Waschflüssigkeit 32 etwa im Bereich der Mindestfüllstandshöhe 204 und damit unterhalb der Umkehrabschnitte 222 und den darüber liegenden Wärmetauscherrohren 98. Die Wärmetauscherrohre 98 werden also ausschließlich oder jedenfalls überwiegend "trocken" durch den außen an ihnen vorbei geführten, zuvor im Waschflüssigkeitspool 44 gereinigten Hochdruck-Entlastungsstrom beheizt. Bei größerer Füllstandshöhe und somit weiter oben im Bereich der Wärmetauscherrohre 98 befindlichem Flüssigkeitsspiegel 224 hingegen ist auch eine teilweise oder sogar vollständige "nasse" Beheizung der Wärmetauscherrohre 98 durch die ihrerseits von dem über die Einströmdüsen 42 einströmenden Ventgas beheizte Waschflüssigkeit 32 möglich. Die zulässige Höchstfüllstandshöhe 226 liegt knapp unterhalb der Feuchtigkeitsabscheider 58 bzw. Filter 60.

### Bezugszeichenliste

- 2: Kernkraftwerk
- 4: Sicherheitshülle
- 6: Innenraum
- 8: Druckentlastungssystem
- 10, 10': Auslass
- 12, 12': Entlastungsleitung
- 14: Waschbehälter
- 16: Filterkammer
- 18: Sorbensfilter
- 20: Kamin
- 22: Leitungsabschnitt
- 24: Vorfilter
- 26: Bypassleitung
- 28: Regelventil
- 30: Absperrventil
- 32: Waschflüssigkeit
- 34: Mindestfüllstandshöhe
- 36: Dosiereinrichtung
- 38: Leitungsabschnitt
- 40: Verteilerstück
- 42: Einströmdüse
- 44: Waschflüssigkeitspool
- 46: Venturirohr
- 48: Austrittsöffnung
- 50: Auswurfzone
- 52: Absperrventil
- 54: Flüssigkeitsableitung
- 56: Höchstfüllstandshöhe
- 58: Feuchtigkeitsabscheider
- 60: Filterelement
- 62: Austrittsöffnung
- 64: Leitungsabschnitt
- 66: Wärmetauscherfläche
- 68: Wärmetauscherfläche
- 70: Hochdruckabschnitt
- 72: Drossel
- 74: Niederdruckabschnitt
- 76: Gastrockner
- 78: Kondensatsammelbehälter
- 80: Überhitzungsabschnitt
- 82: Wärmetauscher-Sorbensfilter-Einheit
- 84: Zentralkammer
- 86: Trennwand
- 88: Filterelement
- 90: Zuströmraum
- 92: Abströmraum
- 94: Innenraum
- 96: Rippen
- 98: Wärmetauscherrohr
- 100: Deckengehäuse
- 102: Gehäusedurchbrechung
- 104: Verzweigungstück
- 106: Bodenbereich
- 108: Sammler
- 110: Gehäusedurchbrechung
- 112: Zentralkammergehäuse
- 114: Rohrleitung
- 116: Leitungsabschnitt
- 118: Leitungsabschnitt
- 120: Zentralkammereinlass
- 122: Durchtrittsöffnung
- 124: Filterkammereinlass
- 126: Filterkammergehäuse
- 128: Filterkammerauslass
- 130: Leitungsabschnitt
- 132: Kondensat
- 134: Kondensatableitung
- 136: Zusatzheizeinrichtung
- 138: Vakuumbegrenzung
- 140: Sauggebläse
- 142: Verzweigungsstelle
- 144: Bypassleitung
- 148: Einmündungsstelle
- 150: Druckminderungsventil
- 152: Kondensationskammer
- 154: Trennwand
- 156: Überströmrohr
- 158: Kondensatflüssigkeit
- 160: Ausströmöffnung
- 162: Mindestfüllstandshöhe
- 164: Kondensationskammerauslass
- 170: Gassammelraum
- 180: Einlassende
- 182: Zirkulationsleitung
- 184: Auslassende
- 186: Strömungsrichtung
- 188: Steigabschnitt
- 192: Leitungsabschnitt
- 200: Wäscher-Wärmetauscher-Sorbensfilter-Einheit
- 202: Gehäuse
- 204: Mindestfüllstandshöhe
- 206: Waschbereich
- 208: Rohrleitung
- 210: Zentralraum
- 212: Strömungskanal
- 214: Strömungskanal
- 216: Deckenbereich
- 218: Strömungskanal
- 220: Strömungskanal
- 222: Umkehrabschnitt
- 224: Flüssigkeitsspiegel
- 226: Höchstfüllstandshöhe
- 228: Beheizungseinrichtung

## Patentansprüche

1. Verfahren zur Druckentlastung eines Kernkraftwerks (2) mit einer Sicherheitshülle (4) zum Einschluss von Aktivitätsträgern und mit einem Auslass (10, 10') für einen Entlastungsstrom, wobei der Entlastungsstrom über eine mit einem Filtersystem versehene Entlastungsleitung (12, 12') aus der Sicherheitshülle (4) in die Atmosphäre geführt wird, wobei das Filtersystem eine Filterkammer (16) mit einem Filterkammereinlass (124), einem Filterkammerauslass (128) und einem dazwischen liegenden Sorbensfilter (18) umfasst, und wobei der Entlastungstrom
- zunächst in einem Hochdruckabschnitt (70) geführt wird,
- anschließend durch Expansion an einer Drosseleinrichtung (72) entspannt wird,
- anschließend zumindest teilweise durch die Filterkammer (16) mit dem Sorbensfilter (18) hindurch geleitet wird, und
- schließlich in die Atmosphäre ausgeblasen wird,
**dadurch gekennzeichnet, dass**
der durch die Drosseleinrichtung (72) entspannte Entlastungstrom unmittelbar vor seinem Eintritt in die Filterkammer (16) durch einen Überhitzungsabschnitt (80) geleitet wird, in dem er durch direkten oder indirekten Wärmeübertrag von dem noch nicht entspannten Entlastungsstrom im Hochdruckabschnitt (70) auf eine Temperatur erhitzt wird, die mindestens 10 °C, vorzugsweise 20 °C bis 50 °C, über der dort vorliegenden Taupunkttemperatur liegt.

2. Verfahren nach Anspruch 1, wobei der Entlastungsstrom im Hochdruckabschnitt (70) zumindest teilweise an der Filterkammer (16) vorbei geführt wird und diese dabei durch Wärmeübertrag beheizt.

3. Verfahren nach Anspruch 1 oder 2, wobei die Filterkammer (16) eine Zentralkammer (84) umgibt oder an sie angrenzt, wobei der Entlastungsstrom im Hochdruckabschnitt (70) durch in der Zentralkammer (84) angeordnete oder in sie hineinragende Wärmetauscherelemente (98) geleitet wird, und wobei der Entlastungsstrom im Überhitzungsabschnitt (80) außen an den Wärmetauscherelementen (98) vorbei durch die Zentralkammer (84) geleitet wird.

4. Verfahren nach einem der Ansprüche 1 bis 3, wobei der Entlastungsstrom im Hochdruckabschnitt (70) durch einen Waschflüssigkeit (32) enthaltenden Waschbehälter (14) mit einer Anzahl von Einströmdüsen (42), vorzugsweise vom Typ Venturiwäscher, geleitet wird.

5. Verfahren nach einem der Ansprüche 1 bis 3, wobei der Entlastungsstrom einer Kondensationskammer (152) eines Kernreaktors, insbesondere eines Siedewasserreaktors, entnommen wird und von dort ohne Zwischenschaltung eines Waschbehälters an der Filterkammer (16) zu deren Beheizung vorbei geführt wird.

6. Verfahren nach Anspruch 4, wobei die Waschflüssigkeit (32) aus dem Waschbehälter (14) durch eine Zirkulationsleitung (182) geführt wird, die zumindest in einem Teilabschnitt im thermischen Kontakt mit der Filterkammer (16) steht und diese durch Wärmeübertrag von der zirkulierenden Waschflüssigkeit (32) beheizt.

7. Verfahren nach Anspruch 6, wobei der durch die Drosseleinrichtung (72) entspannte Entlastungstrom im Überhitzungsabschnitt (80) im thermischen Kontakt mit der Zirkulationsleitung (182) steht und durch Wärmeübertrag von der zirkulierenden Waschflüssigkeit (32) erhitzt wird.

8. Verfahren nach Anspruch 6 oder 7, wobei die Strömung der Waschflüssigkeit (32) durch die Zirkulationsleitung (182) durch den im Waschbehälter (14) von dem Entlastungstrom auf die Waschflüssigkeit (32) übertragenen Impuls angetrieben wird.

9. Verfahren nach einem der Ansprüche 6 bis 8, wobei die dem Waschbehälter (14) entnommene Waschflüssigkeit (32) nach dem Durchströmen der Zirkulationsleitung (182) dem Waschbehälter (14) an geodätisch höher liegender Stelle wieder zugeführt wird.

10. Verfahren nach einem der Ansprüche 6 bis 9, wobei die Filterkammer (16) eine Zentralkammer (84) umgibt oder an sie angrenzt, wobei die zirkulierende Waschflüssigkeit (32) durch in der Zentralkammer (84) angeordnete oder in sie hineinragende Wärmetauscherelemente (98), insbesondere Wärmetauscherrohre, geleitet wird, und wobei der Entlastungstrom im Überhitzungsabschnitt (80) außen an den Wärmetauscherelementen (98) vorbei durch die Zentralkammer (84) geleitet wird.

11. Druckentlastungssystem (8) für ein Kernkraftwerk (2) mit einer Sicherheitshülle (4) zum Einschluss von Aktivitätsträgern und mit einem Auslass (10, 10') für einen Entlastungsstrom, wobei an den Auslass (10, 10') eine mit einem Filtersystem versehene Entlastungsleitung (12, 12') angeschlossen ist, wobei das Filtersystem eine Filterkammer (16) mit einem Filterkammereinlass (124), einem Filterkammerauslass (128) und einem dazwischen liegenden Sorbensfilter (18) umfasst, und wobei
- die Entlastungsleitung (12, 12') einen Hochdruckabschnitt (70) umfasst,
- am Ende des Hochdruckabschnitts (70) eine Drosseleinrichtung (72) in die Entlastungsleitung (12) geschaltet ist,
- die Entlastungsleitung (12, 12') stromabwärts der Drosseleinrichtung (72) in den Filterkammereinlass (124) mündet, und
- der Filterkammerauslass (128) mit einer in die Atmosphäre führenden Ausblasöffnung (20) verbunden ist,
**dadurch gekennzeichnet, dass**
die Entlastungsleitung (12, 12') zwischen der Drosseleinrichtung (72) und dem Filterkammereinlass (124) einen Überhitzungsabschnitt (80) aufweist, der über Wärmetauscherflächen (68) thermisch an den Hochdruckabschnitt (70) angekoppelt ist, wobei diese Wärmetauscherflächen (68) derart dimensioniert sind, dass der bei Auslegungs-Störfallbedingungen sich einstellende Entlastungsstrom im Überhitzungsabschnitt (80) auf eine Temperatur erhitzt wird, die mindestens 10 °C, vorzugsweise 20 °C bis 50 °C, über der dort vorliegenden Taupunkttemperatur liegt.

12. Druckentlastungssystem (8) nach Anspruch 11, wobei der Hochdruckabschnitt (70) zumindest in einem Teilabschnitt an der Filterkammer (16) vorbeigeführt und über Wärmetauscherflächen (66, 68) thermisch an die Filterkammer (16) gekoppelt ist, so dass die Filterkammer (16) durch den Entlastungsstrom beheizt wird.

13. Druckentlastungssystem (8) nach Anspruch 11 oder 12, wobei die Filterkammer (16) eine Zentralkammer (84) umgibt oder an sie angrenzt, wobei ein oder mehrere durchströmbare Wärmetauscherelemente (98) in der Zentralkammer (84) angeordnet sind oder in diese hineinragen, und wobei die Strömungsführung in der Entlastungsleitung (12) derart ausgestaltet ist, dass der Entlastungsstrom im Hochdruckabschnitt (70) durch die Wärmetauscherelemente (98) hindurch geleitet und im Überhitzungsabschnitt (80) außen an den Wärmetauscherelementen (98) vorbei durch die Zentral kammer (84) geleitet wird.

14. Druckentlastungssystem (8) nach einem der Ansprüche 11 bis 13, wobei in den Hochdruckabschnitt (70) ein Waschflüssigkeit (32) enthaltender Waschbehälter (14) mit mindestens einer Einströmdüse (42), vorzugsweise vom Typ Venturiwäscher, in die Entlastungsleitung (12) geschaltet ist.

15. Druckentlastungssystem (8) nach einem der Ansprüche 11 bis 13 für ein Kernkraftwerk (2) mit einem eine Kondensationskammer (152) aufweisenden Siedewasserreaktor, wobei die Entlastungsleitung (12') einströmseitig an die Kondensationskammer (152) angeschlossen ist und von dort ohne zwischengeschalteten Waschbehälter an der Filterkammer (16) zu deren Beheizung vorbei geführt ist.

16. Druckentlastungssystem (8) nach Anspruch 14, wobei an den Waschbehälter (14) eine Zirkulationsleitung (182) zur Zirkulation von Waschflüssigkeit (32) angeschlossen ist, wobei die Zirkulationsleitung (182) an der Filterkammer (16) vorbei geführt ist und im thermischen Kontakt mit ihr steht, so dass ein Wärmeübertrag von der zirkulierenden Waschflüssigkeit (32) auf die Filterkammer (16) erfolgt.

17. Druckentlastungssystem (8) nach Anspruch 16, wobei der Überhitzungsabschnitt (80) der Entlastungsleitung (12) über Wärmetauscherflächen (68) thermisch an die Zirkulationsleitung (182) angekoppelt ist, so dass dort ein Wärmeübertrag von der zirkulierenden Waschflüssigkeit (32) auf den Entlastungsstrom erfolgt.

18. Druckentlastungssystem (8) nach Anspruch 16 oder 17, wobei die Filterkammer (16) eine Zentralkammer (84) umgibt oder an sie angrenzt, wobei die Zirkulationsleitung (182) ein oder mehrere im Entlastungsbetrieb von der Waschflüssigkeit (32) durchströmte Wärmetauscherelemente (98) aufweist, die in der Zentralkammer (84) angeordnet sind oder in diese hineinragen, und wobei die Strömungsführung in der Entlastungsleitung (12) derart ausgestaltet ist, dass der Entlastungsstrom im Überhitzungsabschnitt (80) außen an den Wärmetauscherelementen (98) vorbei durch die Zentralkammer (84) geleitet wird.

19. Druckentlastungssystem (8) nach einem der Ansprüche 16 bis 18, wobei die Zirkulationsleitung (182) einen in den Waschbehälter (14) mündenden Waschflüssigkeitseinlass (180) und einen in Relation zum Waschflüssigkeitseinlass (180) höher liegenden, ebenfalls in den Waschbehälter (14) mündenden Waschflüssigkeitsauslass (184) aufweist.

20. Druckentlastungssystem (8) nach einem der Ansprüche 16 bis 19, wobei zumindest eine der Einströmdüsen (42) derart ausgerichtet ist, dass der auf die Waschflüssigkeit (32) übertragene Impuls des durch sie strömenden Entlastungsstroms die Zirkulation der Waschflüssigkeit (32) durch die Zirkulationsleitung (182) antreibt.

21. Kernkraftwerk (2) mit einer Sicherheitshülle (4) zum Einschluss von Aktivitätsträgern und mit einem Druckentlastungssystem (8) nach einem der Ansprüche 11 bis 20.

## Claims

1. A method for pressure relief of a nuclear power plant (2) having a containment (4) for encapsulating activity carriers and having an outlet (10, 10') for a relief flow, wherein the relief flow is guided from the containment (4) into the atmosphere by means of a relief line (12, 12') provided with a filter system, wherein the filter system comprises a filter chamber (16) with a filter chamber inlet (124), a filter chamber outlet (128) and a sorbent filter (18) situated therebetween, and wherein the relief flow is
- first of all guided into a high-pressure section (70),
- then relaxed through expansion at a throttling device (72),
- then passed, at least partially, through the filter chamber (16) with the sorbent filter (18), and
- finally blown into the atmosphere,
**characterized in that**
the relief flow relaxed through the throttling device (72) is passed, immediately before entering into the filter chamber (16), through an overheating section (80), in which it is heated up, through direct or indirect heat transfer from the still unrelaxed relief flow in the high-pressure section (70), to a temperature lying at least 10°C, preferably 20°C to 50°C, above the dew-point temperature prevailing there.

2. The method of claim 1, wherein the relief flow in the high-pressure section (70) is guided, at least partially, past the filter chamber (16), thereby heating the filter chamber (16) through heat transfer.

3. The method of claims 1 or 2, wherein a filter chamber (16) is provided, which surrounds a central chamber (84) or is adjacent to it, wherein the relief flow in the high-pressure section (70) is guided through heat-exchanger elements (98) arranged in the central chamber (84) or protruding into it, and wherein the relief flow is led in the overheating section (80) past the outside of the heat-exchanger elements (98) through the central chamber (84).

4. The method of claims 1 to 3, wherein the relief flow in the high-pressure section (70) is guided through a scrubbing container (14) containing scrubbing fluid (32) and having a number of flow-in nozzles (42), preferably of the type venturi scrubber.

5. The method of claims 1 to 3, wherein the relief flow is taken from a condensation chamber (152) of a nuclear reactor, in particular of a boiling-water reactor, and is led from there past the filter chamber (16) for heating the latter, without insertion of a scrubbing container.

6. The method of claim 4, wherein the scrubbing fluid (32) from the scrubbing container (14) is guided through a circulation line (182), which is, at least in a partial section, in thermal contact with the filter chamber (16) and heats the latter through heat transfer from the circulating scrubbing fluid (32).

7. The method of claim 6, wherein the relief flow relaxed through the throttling device (72) is in the overheating section (80) in thermal contact with the circulation line (182) and is heated through heat transfer from the circulating scrubbing fluid (32).

8. The method of claim 6 or 7, wherein the flow of the scrubbing fluid (32) through the circulation line (182) is driven by the impulse transferred in the scrubbing container (14) from the relief flow to the scrubbing fluid (32).

9. The method of claims 6 to 8, wherein the scrubbing fluid (32) withdrawn from the scrubbing container (14) is returned to the scrubbing container (14), after having flowed through the circulation line (182), at a geodetically higher point.

10. The method of claims 6 to 9, wherein a filter chamber (16) is provided, which surrounds a central chamber (84) or is adjacent to it, wherein the circulating scrubbing fluid (32) is guided through heat-exchanger elements (98), in particular heat-exchanger pipes, arranged in the central chamber (84) or protruding into it, and wherein the relief flow is led in the overheating section (80) past the outside of the heat-exchanger elements (98) through the central chamber (84).

11. A pressure-relief system (8) for a nuclear power plant (2) having a containment (4) for encapsulating activity carriers and having an outlet (10, 10') for a relief flow, wherein a relief line (12, 12') provided with a filter system is connected to the outlet (10, 10'), wherein the filter system comprises a filter chamber (16) with a filter chamber inlet (124), a filter chamber outlet (128) and a sorbent filter (18) situated therebetween, and wherein
- the relief line (12, 12') comprises a high-pressure section (70),
- a throttling device (72) is inserted into the relief line (12) at the end of the high-pressure section (70),
- the relief line (12, 12') runs into the filter chamber inlet (124) downstream of the throttling device (72), and
- the filter chamber outlet (128) is connected to a blow-out opening (20) leading into the atmosphere,
**characterized in that**
the relief line (12, 12') includes between the throttling device (72) and the filter chamber inlet (124) an overheating section (80), which is thermally coupled via heat-exchanger surfaces (68) with the high-pressure section (70), wherein these heat-exchanger surfaces (68) are dimensioned such that the relief flow arising under conditions of a design incident in the overheating section (80) is heated to a temperature lying at least 10°C, preferably 20°C to 50°C, above the dew-point temperature prevailing there.

12. The pressure-relief system (8) of claim 11, wherein the high-pressure section (70) is led, at least in a partial section, past the filter chamber (16) and is thermally coupled via heat-exchanger surfaces (66, 68) with the filter chamber (16), so that the filter chamber (16) is heated by the relief flow.

13. The pressure-relief system (8) of claim 11 or 12, wherein the filter chamber (16) surrounds a central chamber (84) or is adjacent thereto, wherein one or more heat-exchanger elements (98) which can be flowed through are arranged in the central chamber (84) or protrude into it, and wherein the flow guidance in the relief line (12) is designed in such a manner that the relief flow in the high-pressure section (70) is guided through the heat-exchanger elements (98) and is led in the overheating section (80) past the outside of the heat-exchanger elements (98) through the central chamber (84).

14. The pressure-relief system (8) of claims 11 to 13, wherein a scrubbing container (14) containing scrubbing fluid (32) and having at least one flow-in nozzle (42), preferably of the type venturi scrubber, is inserted into the high-pressure section (70).

15. The pressure-relief system (8) of claims 11 to 13 for a nuclear power plant (2) with a boiling-water reactor including a condensation chamber (152), wherein the relief line (12') is connected on the inflow side to the condensation chamber (152) and is led from there past the filter chamber (16) for heating the latter, without an inserted scrubbing container.

16. The pressure-relief system (8) of claim 14, wherein a circulation line (182) for the circulation of scrubbing fluid (32) is connected to the scrubbing container (14), wherein the circulation line (182) is led past the filter chamber (16) and is in thermal contact therewith, so that a heat transfer is effected from the circulating scrubbing fluid (32) to the filter chamber (16).

17. The pressure-relief system (8) of claim 16, wherein the overheating section (80) of the relief line (12) is thermally coupled, via heat-exchanger surfaces (68), with the circulation line (182), so that there, a heat transfer is effected from the circulating scrubbing fluid (32) to the relief flow.

18. The pressure-relief system (8) of claim 16 or 17, wherein the filter chamber (16) surrounds a central chamber (84) or is adjacent to it, wherein the circulation line (182) includes one or more heat-exchanger elements (98) which in the relief mode are flowed through by the scrubbing fluid (32) and which are arranged in the central chamber (84) or protrude into it, and wherein the flow guidance in the relief line (12) is designed such that the relief flow is led in the overheating section (80) past the outside of the heat-exchanger elements (98) through the central chamber (84).

19. The pressure-relief system (8) of claims 16 to 18, wherein the circulation line (182) includes a scrubbing-fluid inlet (180) running into the scrubbing container (14) and a scrubbing-fluid outlet (184), also running into the scrubbing container (14) and lying higher in relation to the scrubbing-fluid inlet (180).

20. The pressure-relief system (8) of claims 16 to 19, wherein at least one of the flow-in nozzles (42) is oriented such that the impulse of the relief flow which flows through it and which is transferred to the scrubbing fluid (32) drives the circulation of the scrubbing fluid (32) through the circulation line (182).

21. A nuclear power plant (2) having a containment (4) for encapsulating activity carriers and having a pressure-relief system (8) according to claims 11 to 20.

## Revendications

1. Procédé pour la décompression d'une centrale nucléaire (2) ayant une enceinte de confinement (4) pour inclure des porteurs d'activité et ayant une sortie (10, 10') pour un courant de décompression, dans lequel le courant de décompression est guidé de l'enceinte de confinement (4) vers l'atmosphère au moyen d'une conduite de décompression (12, 12') pourvue d'un système filtrant, dans lequel le système filtrant comprend une chambre filtrante (16) avec une entrée (124) de la chambre filtrante, une sortie (128) de la chambre filtrante et un filtre (18) de sorbant situé entre les deux, et dans lequel le courant de décompression est
- d'abord guidé à l'intérieur d'une section à haute pression (70),
- alors détendu à un dispositif d'étranglement (72),
- alors passé, au moins en partie, à travers la chambre filtrante (16) avec le filtre (18) de sorbant, et
- finalement rejeté vers l'atmosphere,
**caractérisé en ce que**
le courant de décompression détendu par le dispositif d'étranglement (72) est passé, immédiatement avant d'entrer dans la chambre filtrante (16), à travers une section de surchauffage (80), dans laquelle il est chauffé, par transfert thermique direct ou indirect venant du courant de décompression pas encore détendu dans la section à haute pression (70), à une température étant au moins 10°C, de préférence 20°C à 50°C, au-dessus de la température du point de rosée y régnant.

2. Procédé selon la revendication 1, dans lequel le courant de décompression est guidé, au moins en partie, dans la section à haute pression (70) à côté de la chambre filtrante (16), en chauffant la chambre filtrante (16) par transfert thermique.

3. Procédé selon la revendication 1 ou 2, dans lequel une chambre filtrante (16) est prévue, qui entoure une chambre centrale (84) ou y est adjacente, dans lequel le courant de décompression est guidé dans la section à haute pression (70) à travers des éléments (98) d'échange thermique qui sont disposés dans la chambre centrale (84) ou se prolongent dans celle-ci, et dans lequel le courant de décompression est guidé dans la section de surchauffage (80) à côté de l'extérieur des éléments (98) d'échange thermique à travers la chambre centrale (84).

4. Procédé selon les revendications 1 à 3, dans lequel le courant de décompression est guidé dans la section à haute pression (70) à travers une cuve de lavage (14) contenant du liquide de lavage (32) et ayant un nombre de tuyères d'affluence (42), de préférence du type laveur situé entre les deux Venturi.

5. Procédé selon les revendications 1 à 3, dans lequel le courant de décompression est pris d'une chambre à condensation (152) d'un réacteur nucléaire, en particulier d'un réacteur à eau bouillante, et est guidé de là à côté de la chambre filtrante (16) pour chauffer celle-ci, sans insertion d'une cuve de lavage.

6. Procédé selon la revendication 4, dans lequel le liquide de lavage (32) venant de la cuve de lavage (14) est conduit à travers une conduite de circulation (182) qui est, au moins dans une section partielle, en contact thermique avec la chambre filtrante (16) et chauffe celle-ci par transfert thermique du liquide de lavage (32) circulant.

7. Procédé selon la revendication 6, dans lequel le courant de décompression détendu par le dispositif d'étranglement (72) est dans la section de surchauffage (80) en contact thermique avec la conduite de circulation (182) et est chauffé par transfert thermique du liquide de lavage (32) circulant.

8. Procédé selon la revendication 6 ou 7, dans lequel le courant du liquide de lavage (32) à travers la conduite de circulation (182) est propulsé par l'impulsion transférée, dans la cuve de lavage (14), du courant de décompression au liquide de lavage (32).

9. Procédé selon les revendications 6 à 8, dans lequel le liquide de lavage (32) pris de la cuve de lavage (14) est ramené à la cuve de lavage (14), après avoir passé à travers la conduite de circulation (182), à un point géodésiquement plus haut.

10. Procédé selon les revendications 6 à 9, dans lequel une chambre filtrante (16) est prévue, qui entoure une chambre centrale (84) ou y est adjacente, dans lequel le liquide de lavage (32) circulant est conduit à travers des éléments (98) d'échange thermique, en particulier des tuyaux d'échange thermique, qui sont disposés dans la chambre centrale (84) ou se prolongent dans celle-ci, et dans lequel le courant de décompression est guidé dans la section de surchauffage (80) à côté des éléments (98) d'échange thermique à travers la chambre centrale (84).

11. Système de décompression (8) pour une centrale nucléaire (2) ayant une enceinte de confinement (4) pour inclure des porteurs d'activité et ayant une sortie (10, 10') pour un courant de décompression, dans lequel une conduite de décompression (12, 12') pourvue d'un système filtrant est reliée à la sortie (10, 10'), dans lequel le système filtrant comprend une chambre filtrante (16) avec une entrée (124) de la chambre filtrante, une sortie (128) de la chambre filtrante et un filtre (18) de sorbant situé entre les deux, et dans lequel
- la conduite de décompression (12, 12') comprend une section à haute pression (70),
- un dispositif d'étranglement (72) est inséré dans la conduite de décompression (12) à la fin de la section à haute pression (70),
- la conduite de décompression (12, 12') débouche dans l'entrée (124) de la la chambre filtrante en aval du dispositif d'étranglement (72), et
- la sortie (128) de la chambre filtrante est reliée à une bouche de sortie (20) menant dans l'atmosphère,
**caractérisé en ce que**
la conduite de décompression (12, 12') comprend entre le dispositif d'étranglement (72) et l'entrée (124) de la chambre filtrante une section de surchauffage (80) qui est couplé thermiquement, moyennant des surfaces (68) d'échange thermique avec la section à haute pression (70), dans lequel ces surfaces (68) d'échange thermique sont dimensionnées de façon à ce que le courant de décompression apparaissant sous des conditions d'un incident de conception dans la section de surchauffage (80) est chauffé à une température étant au moins 10°C, de préférence 20°C à 50°C, au-dessus de la température du point de rosée y régnant.

12. Système de décompression (8) selon la revendication 11, dans lequel la section à haute pression (70) est guidé, au moins dans une section partielle, à côté de la chambre filtrante (16) et est couplée thermiquement, moyennant des surfaces (66, 68) d'échange thermique, avec la chambre filtrante (16), de manière que la chambre filtrante (16) est chauffé par le courant de décompression.

13. Système de décompression (8) selon la revendication 11 ou 12, dans lequel la chambre filtrante (16) entoure une chambre centrale (84) ou y est adjacente, dans lequel un ou plusieurs éléments (98) d'échange thermique qui peuvent être parcourus sont disposés dans la chambre centrale (84) ou se prolongent dans celle-ci, et dans lequel le guidage du courant dans la conduite de décompression (12) est conçu de façon à ce que le courant de décompression est guidé dans la section à haute pression (70) à travers les éléments (98) d'échange thermique et est guidé dans la section de surchauffage (80) à côté de l'extérieur des éléments (98) d'échange thermique à travers la chambre centrale (84).

14. Système de décompression (8) selon les revendications 11 à 13, dans lequel une cuve de lavage (14) contenant du liquide de lavage (32) et ayant au moins une tuyère d'affluence (42), de préférence du type laveur Venturi, est insérée dans la section à haute pression (70).

15. Système de décompression (8) selon les revendications 11 à 13 pour une centrale nucléaire (2) avec un réacteur à eau bouillante comprenant une chambre à condensation (152), dans lequel la conduite de décompression (12') est reliée du côté de l'entrée à la chambre à condensation (152) et est guidé de là à côté de la chambre filtrante (16) pour chauffer celle-ci, sans insertion d'une cuve de lavage.

16. Système de décompression (8) selon la revendication 14, dans lequel une conduite de circulation (182) pour la circulation de liquide de lavage (32) est reliée à la cuve de lavage (14), dans lequel la conduite de circulation (182) est guidé à côté de la chambre filtrante (16) et est en contact thermique avec celle-ci, de manière qu'un transfert thermique est effectué du liquide de lavage (32) circulant à la chambre filtrante (16).

17. Système de décompression (8) selon la revendication 16, dans lequel la section de surchauffage (80) de la conduite de décompression (12) est couplé thermiquement, moyennant des surfaces (68) d'échange thermique avec la conduite de circulation (182), de manière qu'un transfert thermique est effectué là, du liquide de lavage (32) circulant au courant de décompression.

18. Système de décompression (8) selon la revendication 16 ou 17, dans lequel la chambre filtrante (16) entoure une chambre centrale (84) ou y est adjacente, dans lequel la conduite de circulation (182) comprend un ou plusieurs éléments (98) d'échange thermique qui, dans le mode de décompression, sont parcourus par le liquide de lavage (32) et qui sont disposés dans la chambre centrale (84) ou se prolongent dans celle-ci, et dans lequel le guidage du courant dans la conduite de décompression (12) est conçu de façon à ce que le courant de décompression est guidé dans la section à haute pression (70) à côté des éléments (98) d'échange thermique à travers la chambre centrale (84).

19. Système de décompression (8) selon les revendications 16 à 18, dans lequel la conduite de circulation (182) comprend une entrée (180) de liquide de lavage débouchant dans la cuve de lavage (14) et une sortie (184) de liquide de lavage débouchant également dans la cuve de lavage (14) et situé plus haut relativement à l'entrée (180) de liquide de lavage.

20. Système de décompression (8) selon les revendications 16 à 19, dans lequel au moins une des tuyères d'affluence (42) est orientée de façon à ce que l'impulsion du courant de décompression qui la parcourt et qui est transférée au liquide de lavage (32) propulse la circulation du liquide de lavage (32) à travers la conduite de circulation (182).

21. Centrale nucléaire (2) ayant une enceinte de confinement (4) pour inclure des porteurs d'activité et ayant un système de décompression (8) selon les revendications 11 à 20.
